# EUROPEAN PATENT APPLICATION

(11) **EP 4 815 511 A1**
(43) Date of publication of application: **30.09.2026**
(21) Application number: 25816121.5
(22) Date of filing: 07.02.2025
(51) Int. Cl.: H04S 7/00, H04R 5/02

(54) **ELECTRONIC DEVICE AND CONTROL METHOD THEREOF**

(30) Priority: 29.05.2024 KR 20240070008
(71) Applicant: Samsung Electronics Co., Ltd., Suwon-si, Gyeonggi-do 16677 (KR)
(72) Inventor: JE, Byoungsoo, Suwon-si Gyeonggi-do 16677 (KR)
(74) Representative: Appleyard Lees IP LLP
(86) International application number: PCT/KR2025/001867
(87) International publication number: WO 2025/249703

(57) **Abstract**

An electronic apparatus including at least one processor configured to identify an audio apparatus connectable to the electronic apparatus through a communication interface, acquire, from the audio apparatus through the communication interface, channel configuration information related to a plurality of speakers included in the audio apparatus, a position response signal representing a position of the audio apparatus, and tilt angle information representing a degree to which the audio apparatus is tilted in space, identify an arrangement position of the audio apparatus based on the position response signal, identify an arrangement angle of the audio apparatus based on the tilt angle information, acquire audio data for outputting different audio signals to each of the plurality of speakers of the audio apparatus based on audio content stored by the electronic apparatus, the channel configuration information, the arrangement position, and the arrangement angle, and transmit the audio data to the audio apparatus.

## Description

### [Technical Field]

The disclosure relates to an electronic apparatus and a controlling method thereof, and more particularly, to an electronic apparatus that provides audio data by considering an arrangement position and an arrangement angle of an audio output device, and a controlling method thereof.

### [Background Art]

In order to implement a multi-channel sound environment in a specific space, an audio apparatus capable of providing a multi-channel sound environment may be used.

Depending on the position or direction in which the audio apparatus is arranged in a space providing a sound environment, the audio channels provided by the audio apparatus may be different. For example, in the case of 3 channels (left channel, center channel, and right channel), it is necessary to provide different audio signals suitable for the audio apparatus by considering the user's position or reference position.

When a user directly inputs information on the arrangement of the audio apparatus, it may be inconvenient. Even if the position of the audio apparatus is automatically identified, the audio apparatus should be arranged in a predetermined posture (or direction). When the predetermined posture (or direction) should be recognized through a separate manual or guide, it may be inconvenient for the user.

In the case where there is a difference in horizontal and vertical lengths as in a sound bar, it may be difficult to implement an audio environment according to the arrangement angle (or arrangement direction or arrangement posture).

### [Disclosure]

### [Technical Solution]

The disclosure provides an electronic apparatus for generating audio data to be output through an audio apparatus by considering a channel configuration that the audio apparatus may provide and an arrangement environment of an audio apparatus 200, and a controlling method thereof.

According to an aspect of the disclosure, an electronic apparatus includes: a memory configured to store audio content; a communication interface; and at least one processor, in which the at least one processor is configured to identify an audio apparatus connectable to the electronic apparatus through the communication interface, acquire, from the audio apparatus through the communication interface, channel configuration information related to a plurality of speakers included in the audio apparatus, a position response signal representing a position of the audio apparatus, and tilt angle information representing a degree to which the audio apparatus is tilted in space, identify an arrangement position of the audio apparatus based on the position response signal, identify an arrangement angle of the audio apparatus based on the tilt angle information, acquire audio data for outputting different audio signals to each of the plurality of speakers of the audio apparatus based on the audio content, the channel configuration information, the arrangement position, and the arrangement angle, and transmit the audio data to the audio apparatus through the communication interface.

The channel configuration information may represent a channel corresponding to each of the plurality of speakers included in the audio apparatus.

The at least one processor may be configured to, based on the tilt angle information being changed, re-identify the arrangement angle, change the audio data based on the audio content, the channel configuration information, the arrangement position, and the re-identified arrangement angle, and transmit the changed audio data to the audio apparatus through the communication interface.

The at least one processor may be configured to transmit a control command requesting the position response signal to the audio apparatus through the communication interface at a first time point, receive the position response signal from the audio apparatus through the communication interface at a second time point, and identify the arrangement position of the audio apparatus based on the first time point, the second time point, and a transmission speed of the position response signal.

The at least one processor may be configured to allow the audio apparatus to acquire a rotation angle (roll, pitch, and yaw) corresponding to three axes (x, y, and z) representing three dimensions based on the tilt angle information, and identify the arrangement angle of the audio apparatus based on the rotation angle (roll, pitch, and yaw).

The audio apparatus may include a first audio apparatus and a second audio apparatus, and the at least one processor may be configured to acquire first channel configuration information, a first position response signal, and first tilt angle information of the first audio apparatus through the communication interface, and acquire second channel configuration information, a second position response signal, and second tilt angle information of the second audio apparatus through the communication interface.

The at least one processor may be configured to identify a first arrangement position of the first audio apparatus based on the first position response signal, identify a second arrangement position of the second audio apparatus based on the second position response signal, identify a first arrangement angle of the first audio apparatus based on the first tilt angle information, and identify a second arrangement angle of the second audio apparatus based on the second tilt angle information.

The at least one processor may be configured to acquire first audio data to be output to the first audio apparatus and second audio data to be output to the second audio apparatus based on the audio content, the first channel configuration information, the first arrangement position, the first arrangement angle, the second channel configuration information, the second arrangement position, and the second arrangement angle, and transmit the first audio data to the first audio apparatus and the second audio data to the second audio apparatus through the communication interface.

The electronic apparatus may further include: a sensor unit, in which the at least one processor may be configured to acquire the tilt angle information of the electronic apparatus through the sensor unit, and identify the arrangement position and the arrangement angle of the audio apparatus based on the position response signal, the tilt angle information of the electronic apparatus, and the tilt angle information of the audio apparatus.

The at least one processor may be configured to acquire a first angle representing a yaw angle of the electronic apparatus based on the tilt angle information of the electronic apparatus, acquire a second angle representing a yaw angle of the audio apparatus based on the tilt angle information of the audio apparatus, identify candidate areas of the audio apparatus based on a difference value between the first angle and the second angle, and identify the arrangement position of the audio apparatus based on a direction in which the position response signal is output among the candidate areas.

According to another aspect of the disclosure, a controlling method of an electronic apparatus configured to store audio content includes: identifying an audio apparatus connectable to the electronic apparatus; acquiring, from the audio apparatus, channel configuration information related to a plurality of speakers included in the audio apparatus, a position response signal representing a position of the audio apparatus, and tilt angle information representing a degree to which the audio apparatus is tilted in space; identifying an arrangement position of the audio apparatus based on the position response signal; identifying an arrangement angle of the audio apparatus based on the tilt angle information, acquiring audio data for outputting different audio signals to each of the plurality of speakers of the audio apparatus based on the audio content, the channel configuration information, the arrangement position, and the arrangement angle; and transmitting the audio data to the audio apparatus.

The channel configuration information may represent a channel corresponding to each of the plurality of speakers included in the audio apparatus.

The controlling method may further include: when the tilt angle information changes, re-identifying the arrangement angle; changing the audio data based on the audio content, the channel configuration information, the arrangement position, and the re-identified arrangement angle; and transmitting the changed audio data to the audio apparatus.

The identifying of the arrangement position may include: transmitting a control command requesting the position response signal to the audio apparatus at a first time point; receiving the position response signal from the audio apparatus at a second time point; and identifying the arrangement position of the audio apparatus based on the first time point, the second time point, and a transmission speed of the position response signal.

In the identifying of the arrangement angle, the audio apparatus may acquire a rotation angle (roll, pitch, and yaw) corresponding to three axes (x, y, and z) representing three dimensions based on the tilt angle information, and the arrangement angle of the audio apparatus may be identified based on the rotation angle (roll, pitch, and yaw).

The audio apparatus may include a first audio apparatus and a second audio apparatus, and the acquiring of the channel configuration information, the position response signal, and the tilt angle information may acquire the first channel configuration information, the first position response signal, and the first tilt angle information of the first audio apparatus, and acquire the second channel configuration information, the second position response signal, and the second tilt angle information of the second audio apparatus.

In the identifying of the arrangement position, the first arrangement position of the first audio apparatus may be identified based on the first position response signal and the second arrangement position of the second audio apparatus may be identified based on the second position response signal, and in the identifying of the arrangement angle, the first arrangement angle of the first audio apparatus may be identified based on the first tilt angle information and the second arrangement angle of the second audio apparatus may be identified based on the second tilt angle information.

In the acquiring of the audio data, the first audio data to be output to the first audio apparatus and the second audio data to be output to the second audio apparatus may be acquired based on the audio content, the first channel configuration information, the first arrangement position, the first arrangement angle, the second channel configuration information, the second arrangement position, and the second arrangement angle, and in the transmitting of the audio data, the first audio data may be transmitted to the first audio apparatus and the second audio data may be transmitted to the second audio apparatus.

In the identifying of the arrangement position and the arrangement angle, the tilt angle information of the electronic apparatus may be acquired through the sensor unit of the electronic apparatus, and the arrangement position and the arrangement angle of the audio apparatus may be identified based on the position response signal, the tilt angle information of the electronic apparatus, and the tilt angle information of the audio apparatus.

In the identifying of the arrangement position and the arrangement angle, the first angle representing the yaw angle of the electronic apparatus may be acquired based on the tilt angle information of the electronic apparatus, the second angle representing the yaw angle of the audio apparatus may be identified based on the tilt angle information of the audio apparatus, the candidate areas of the audio apparatus may be identified based on the difference value between the first angle and the second angle, and the arrangement position of the audio apparatus may be identified based on the direction in which the position response signal is output among the candidate areas.

### [Description of Drawings]

FIG. 1 is a diagram for describing an electronic apparatus and an audio apparatus according to an embodiment.
FIG. 2 is a block diagram illustrating the electronic apparatus according to an embodiment.
FIG. 3 is a block diagram for describing a specific configuration of the electronic apparatus of FIG. 2 according to an embodiment.
FIG. 4 is a diagram for describing the audio apparatus according to an embodiment.
FIG. 5 is a flowchart for describing an operation of providing audio data using information related to the arrangement of the audio apparatus according to an embodiment.
FIG. 6 is a sequence diagram for describing an operation of generating the audio data for the audio apparatus according to an embodiment.
FIG. 7 is a sequence diagram for describing an operation of identifying arrangement information of the audio apparatus through a captured image according to an embodiment.
FIG. 8 is a sequence diagram for describing the electronic apparatus connected to the plurality of audio apparatuses according to an embodiment.
FIG. 9 is a sequence diagram for describing a situation in which an arrangement angle of the audio apparatus changes according to an embodiment.
FIG. 10 is a sequence diagram for describing a situation in which the arrangement position and an arrangement angle of the audio apparatus change according to an embodiment.
FIG. 11 is a sequence diagram for describing the arrangement angle according to an embodiment.
FIG. 12 is a diagram for describing an operation of outputting audio data through one audio apparatus according to an embodiment.
FIG. 13 is a diagram for describing an operation of outputting audio data through one audio apparatus according to an embodiment.
FIG. 14 is a diagram for describing an operation of outputting audio data through one audio apparatus according to an embodiment.
FIG. 15 is a diagram for describing an operation of outputting audio data through two audio apparatuses according to an embodiment.
FIG. 16 is a diagram for describing an operation of outputting audio data through two audio apparatuses according to an embodiment.
FIG. 17 is a diagram for describing an operation of outputting audio data through two audio apparatuses according to an embodiment.
FIG. 18 is a diagram for describing an operation of outputting audio data through two audio apparatuses according to an embodiment.
FIG. 19 is a diagram for describing an operation of outputting audio data through two audio apparatuses according to an embodiment.
FIG. 20 is a diagram for describing an operation of outputting audio data through three audio apparatuses according to an embodiment.
FIG. 21 is a diagram for describing an operation of outputting audio data through three audio apparatuses according to an embodiment.
FIG. 22 is a diagram for describing an operation of outputting audio data through four audio apparatuses according to an embodiment.
FIG. 23 is a diagram for describing an operation of outputting audio data through four audio apparatuses according to an embodiment.
FIG. 24 is a diagram for describing an operation of outputting audio data through four audio apparatuses according to an embodiment.
FIG. 25 is a diagram for describing an operation of outputting audio data through nine audio apparatuses according to an embodiment.
FIG. 26 is a diagram for describing an operation of outputting audio data through nine audio apparatuses according to an embodiment.
FIG. 27 is a diagram for describing an audio apparatus including a plurality of sub-speakers according to an embodiment.
FIG. 28 is a diagram for describing a contact terminal according to an embodiment.
FIG. 29 is a diagram for describing a stand for holding the audio apparatus according to an embodiment.
FIG. 30 is a diagram for describing a plurality of audio apparatuses erected on the stand according to an embodiment.
FIG. 31 is a diagram for describing the plurality of audio apparatuses erected on the stand according to an embodiment.
FIG. 32 is a diagram for describing an audio apparatus in a state of being elongated to a specific angle range according to an embodiment.
FIG. 33 is a diagram for describing a situation in which different types of audio apparatuses exist according to an embodiment.
FIG. 34 is a sequence diagram for describing an operation of acquiring audio data using a server according to an embodiment.
FIG. 35 is a diagram for describing an operation of allocating channel-specific audio signals by dividing a space according to an embodiment.
FIG. 36 is a flowchart for describing a controlling method of an electronic apparatus according to an embodiment.

### [Mode for Invention]

Hereinafter, the disclosure will be described in detail with reference to the accompanying drawings.

General terms that are currently widely used were selected as terms used in embodiments of the disclosure in consideration of functions in the disclosure, but may be changed according to the intention of those skilled in the art or a judicial precedent, the emergence of a new technique, and the like. In addition, in a specific case, terms arbitrarily chosen by an applicant may exist. In this case, the meaning of such terms will be mentioned in detail in a corresponding description portion of the disclosure. Therefore, the terms used in embodiments of the disclosure are to be defined on the basis of the meaning of the terms and the contents throughout the disclosure rather than simple names of the terms.

In the specification, an expression "have", "may have", "include", "may include", or the like, indicates existence of a corresponding feature (e.g., a numerical value, a function, an operation, a component such as a part, or the like), and does not exclude existence of an additional feature.

An expression "at least one of A and/or B" is to be understood to represent "A" or "B" or "any one of A and B".

Expressions "first," "second," "1^{st}" or "2^{nd}" or the like, used in the disclosure may indicate various components regardless of a sequence and/or importance of the components, will be used only in order to distinguish one component from the other components, and do not limit the corresponding components.

When it is mentioned that any component (for example, a first component) is (operatively or communicatively) coupled to/to or is connected to another component (for example, a second component), it is to be understood that any component is directly coupled to another component or may be coupled to another component through the other component (for example, a third component).

Singular forms include plural forms unless the context clearly indicates otherwise. It should be understood that terms "include" or "formed of" used in the specification specify the presence of features, numerals, steps, operations, components, parts, or combinations thereof mentioned in the specification, but do not preclude the presence or addition of one or more other features, numerals, steps, operations, components, parts, or combinations thereof.

In the disclosure, a "module" or a "~er/or" may perform at least one function or operation, and be implemented as hardware or software or be implemented as a combination of hardware and software. In addition, a plurality of 'modules' or a plurality of 'portions' may be integrated in at least one module and be implemented by at least one processor except for a 'module' or a 'portion' that needs to be implemented by specific hardware.

In the disclosure, a term "user" may refer to a person using an electronic apparatus or an apparatus (for example, an artificial intelligence electronic apparatus) using an electronic apparatus.

Hereinafter, an embodiment of the disclosure will be described in detail with reference to the accompanying drawings.

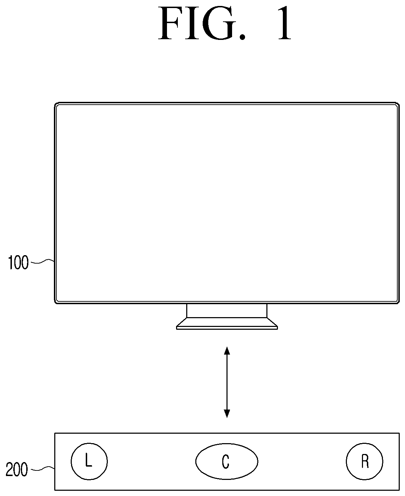

FIG. 1 is a diagram for describing an electronic apparatus 100 and an audio apparatus 200 according to an embodiment.

The electronic apparatus 100 may be connected to the audio apparatus 200 wirelessly or by wire. The electronic apparatus 100 may be an apparatus that provides audio data to the audio apparatus 200. The electronic apparatus 100 may provide the audio data to the audio apparatus 200 based on a user's command or a pre-stored command.

The electronic apparatus 100 may provide the audio data by considering information on the audio apparatus 200. The information on the audio apparatus 200 may represent various attribute information related to the audio apparatus 200.

The attribute information may include at least one of hardware attribute information or software attribute information that may represent the audio apparatus 200. The hardware attribute information may include at least one of output performance (e.g., speaker output limit) or channel configuration information.

The channel configuration information may represent information on audio channels that the audio apparatus 200 may implement. For example, the audio apparatus 200 may include at least one speaker that implements 1 channel, 2 channels, 3 channels, 5 channels, 7 channels, etc. The audio apparatus 200 may include at least one speaker for outputting a specific channel. The audio apparatus 200 may be a multi-channel speaker.

The software attribute information may represent sound effect settings that the audio apparatus 200 may implement. The audio apparatus 200 may convert and output a received audio signal. The software attribute information may include information representing which conversion method the audio apparatus 200 may apply to output the audio signal. The software attribute information may include information on a sound equalizer. A sound equalizer may be software that converts the audio signal by controlling (or adjusting) a specific frequency range of the audio signal.

The electronic apparatus 100 may generate the audio data to be provided to the audio apparatus 200 using the attribute information related to the audio apparatus 200. The electronic apparatus 100 may provide the generated audio data to the audio apparatus 200.

The electronic apparatus 100 may be an apparatus capable of generating the audio data.

According to an embodiment, the electronic apparatus 100 may be a source device providing the audio data. For example, the electronic apparatus 100 may be a TV.

According to an embodiment, the electronic apparatus 100 may be an apparatus belonging to an Internet of Things (IoT) network. The electronic apparatus 100 may be an apparatus included in a network that may be connected to the audio apparatus 200.

According to an embodiment, the electronic apparatus 100 may be a sound device. When there are a plurality of audio apparatuses used to output the audio data to a user, the electronic apparatus 100 may represent a main audio apparatus among the plurality of audio apparatuses.

According to an embodiment, the electronic apparatus 100 may be a server. The electronic apparatus 100 may be the server that exists in a separate space from the audio apparatus 200 and may be accessed through an Internet network. For example, the electronic apparatus 100 may be the server that manages the IoT network.

According to an embodiment, the electronic apparatus 100 may be a user terminal device. The electronic apparatus 100 may be a terminal device having a music application installed thereon. For example, the electronic apparatus 100 may be a smartphone, a tablet, a smart watch, a smart ring, etc.

The audio apparatus 200 may be described as a sound bar, a sound device, a sound output device, an audio output device, etc.

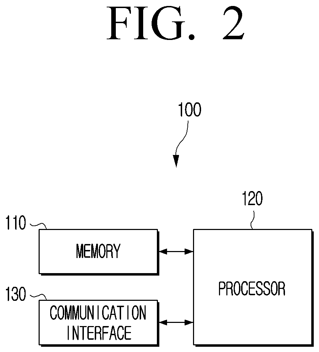

FIG. 2 is a block diagram illustrating the electronic apparatus 100 according to an embodiment.

Referring to FIG. 2, the electronic apparatus 100 may include at least one of a memory 110, at least one processor 120, or a communication interface 130.

The electronic apparatus 100 may be an electronic whiteboard, a TV, a desktop PC, a laptop, a smartphone, a tablet PC, a server, etc. The above-described examples are merely examples for describing the electronic apparatus and are not necessarily limited to the above-described devices.

The memory 110 may store audio content. The audio content may be stored in the memory 110 according to a user's selection. The audio content may be pre-stored content. The audio content may be content received from an external server according to a user's command.

The communication interface 130 may include a wireless communication module or a wired communication module. The electronic apparatus 100 and the audio apparatus 200 may be communicatively connected to each other through the communication interface 130.

At least one processor 120 may control the overall operation of the electronic apparatus 100. At least one processor 120 may perform a function of controlling an overall operation of the electronic apparatus 100.

At least one processor 120 may identify the audio apparatus 200 connectable to the electronic apparatus through the communication interface 130.

At least one processor 120 may acquire, from the audio apparatus 200 through the communication interface 130, channel configuration information related to a plurality of speakers included in the audio apparatus 200, a position response signal representing a position of the audio apparatus 200, and tilt angle information representing a degree of tilt of the audio apparatus 200 in space.

At least one processor 120 may identify an arrangement position of the audio apparatus 200 based on the position response signal. At least one processor 120 may identify an arrangement angle of the audio apparatus 200 based on the tilt angle information.

At least one processor 120 may acquire audio data for outputting different audio signals to each of the plurality of speakers of the audio apparatus 200 based on the audio content, the channel configuration information, the arrangement position, and the arrangement angle. At least one processor 120 may transmit the audio data to the audio apparatus 200 through the communication interface 130.

At least one processor 120 may search for peripheral devices connectable to the electronic apparatus 100 using the communication interface 130. At least one processor 120 may selectively search for the audio apparatus 200 that may perform an audio function among the peripheral devices. The search method may vary.

According to an embodiment, at least one processor 120 may perform an operation of searching for a connectable peripheral device, and search (or identify) the audio apparatus 200 that may perform the audio output function among the connectable peripheral devices based on the result of the search.

According to an embodiment, at least one processor 120 may perform an operation of searching for the audio apparatus 200 that may perform the audio function among the pre-registered peripheral devices.

At least one processor 120 may perform a communication connection with the audio apparatus 200 identified as the search result. The electronic apparatus 100 and the audio apparatus 200 may be communicatively connected to each other. For example, the electronic apparatus 100 and the audio apparatus 200 may be connected using a Bluetooth communication method or a Wi-Fi communication method.

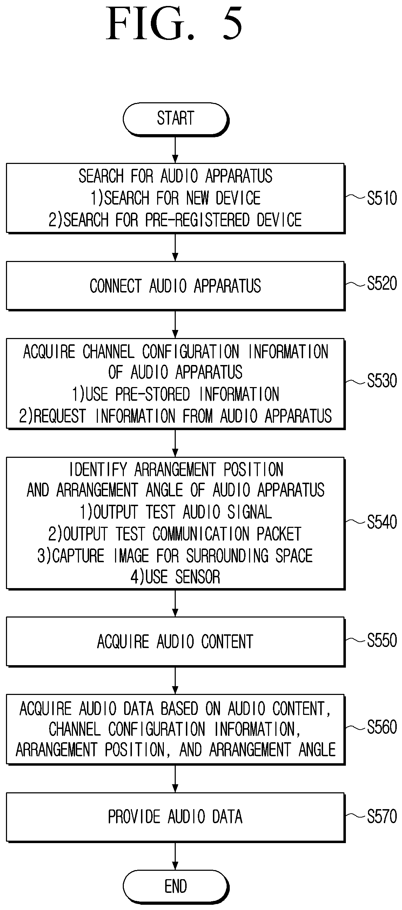

Descriptions for each embodiment are described in steps S510 and S520 of FIG. 5.

At least one processor 120 may receive the channel configuration information from the audio apparatus 200 through the communication interface 130.

The channel configuration information may represent channels corresponding to each of a plurality of speakers included in the audio apparatus 200. The channel configuration information may represent configuration information for audio channels that the audio apparatus 200 may output. The channel may be described as an audio channel, an audio signal channel, etc.

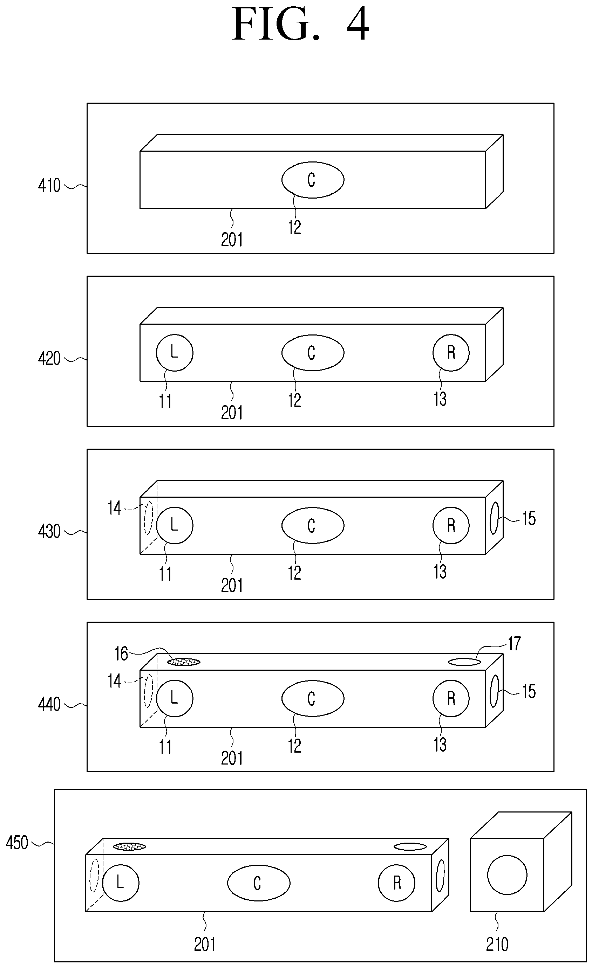

For example, when the audio apparatus 200 includes seven speakers as in embodiment 440 of FIG. 4, the channel configuration information may include mapping information related to seven speakers and seven channels. The mapping information may include information on each channel and each speaker being mapped.

The channel configuration information may include information on a type (channel) of audio signals that the audio apparatus 200 may output. The audio apparatus 200 may include a plurality of speakers, and each of the plurality of speakers may provide different audio signals.

For example, the audio apparatus 200 may include a first speaker 11, a second speaker 12, and a third speaker 13. The audio apparatus 200 may output a first audio signal through the first speaker 11, a second audio signal through the second speaker 12, and a third audio signal through the third speaker 13.

At least one processor 120 may control at least some of the plurality of speakers to output different audio signals.

A description of the audio apparatus 200 including the plurality of speakers is disclosed in FIG. 4. FIG. 4 describes the audio apparatus 200 capable of providing the plurality of channels. A description of an operation of receiving the channel configuration information is described in step S530 of FIG. 5.

When the tilt angle information changes, at least one processor 120 may re-identify the arrangement angle, change the audio data based on the audio content, the channel configuration information, the arrangement position, and the re-identified arrangement angle, and transmit the changed audio data to the audio apparatus 200 through the communication interface 130.

At least one processor 120 may change the audio data provided to the audio apparatus 200 when the arrangement angle of the audio apparatus 200 changes. When the arrangement angle changes, the sound environment due to the arrangement of the audio apparatus 200 may change. At least one processor 120 needs to generate new audio data.

A subject determining the arrangement angle may vary.

According to an embodiment, it may be determined whether the arrangement angle of the audio apparatus 200 may change by the audio apparatus 200. When the arrangement angle changes, the audio apparatus 200 may transmit new tilt angle information to the electronic apparatus 100.

At least one processor 120 may receive new tilt angle information from the audio apparatus 200 and generate new audio data based on the received new tilt angle information.

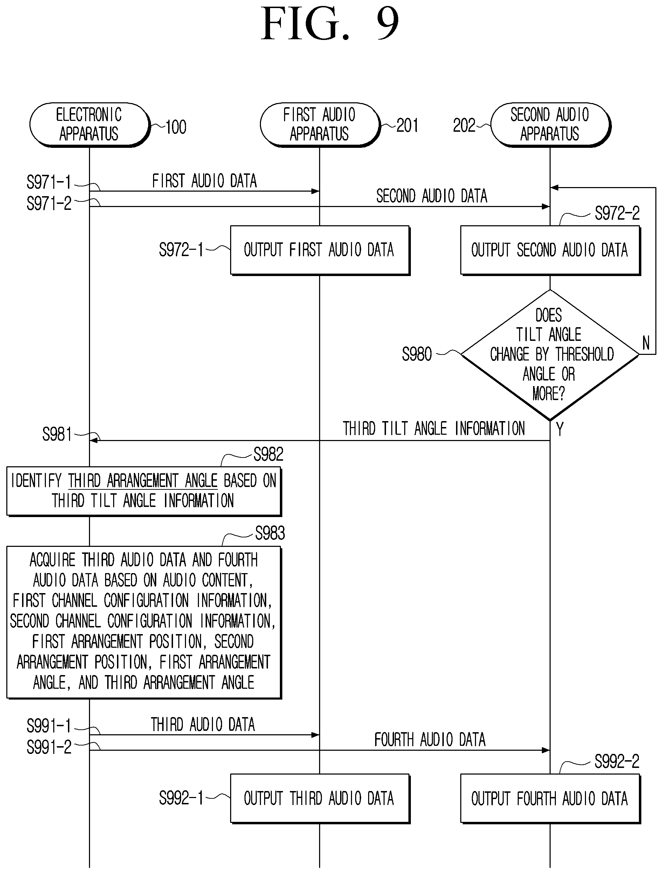

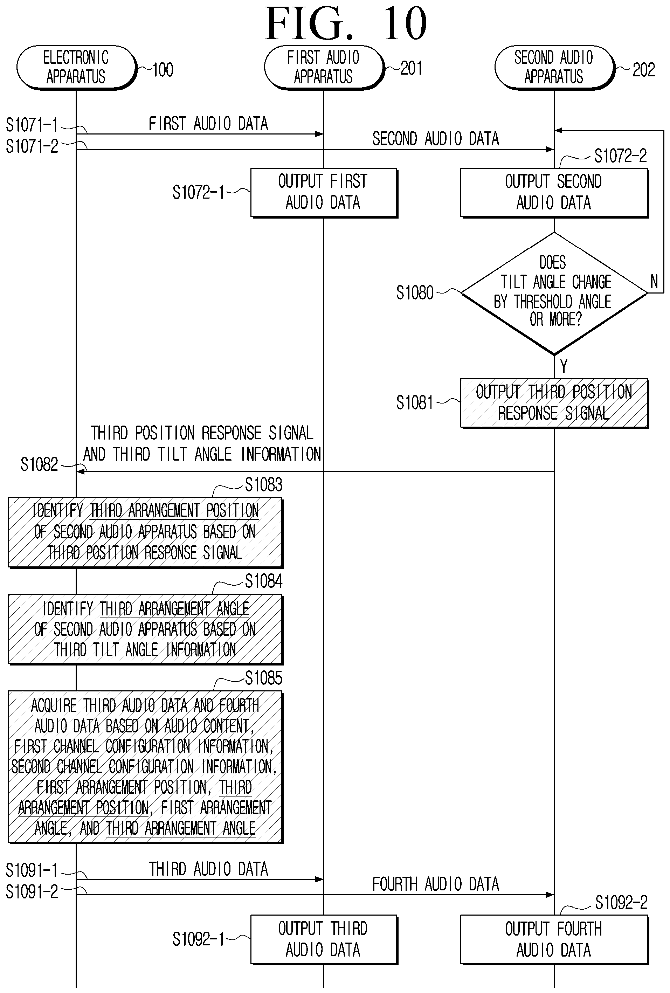

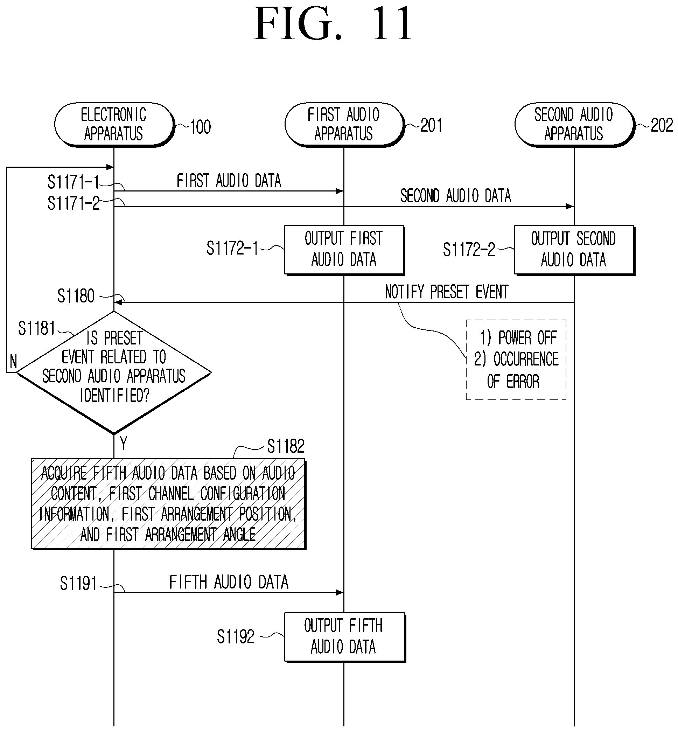

A specific operation of the audio apparatus 200 detecting a change in tilt is described in FIG. 9. An embodiment of changing the audio data by considering not only the change in tilt of the audio apparatus 200 but also the change in position is described in FIG. 10. An embodiment of changing the audio data by considering the connection with the audio apparatus 200, the function error of the audio apparatus 200, etc., is described in FIG. 11.

According to an embodiment, the electronic apparatus 100 may directly determine whether the arrangement angle changes. The electronic apparatus 100 may directly determine whether the arrangement angle of the audio apparatus 200 changes by using the tilt angle information received from the audio apparatus 200.

At least one processor 120 may acquire (or track) the arrangement angle of the audio apparatus 200 in real time. At least one processor 120 may identify whether the arrangement angle of the audio apparatus 200 changes. At least one processor 120 may determine whether the arrangement angle of the audio apparatus 200 change by a threshold angle or more.

At least one processor 120 may receive the position response signal from the audio apparatus 200 through the communication interface 130.

The position response signal may include a signal used to identify a position. The position response signal may be a signal output (or transmitted) in response to a signal requesting a position. The form of the position response signal may be various.

For example, the position response signal may be a test audio signal. For example, the position response signal may be a test communication packet. A specific description related thereto is described in step S540 of FIG. 5.

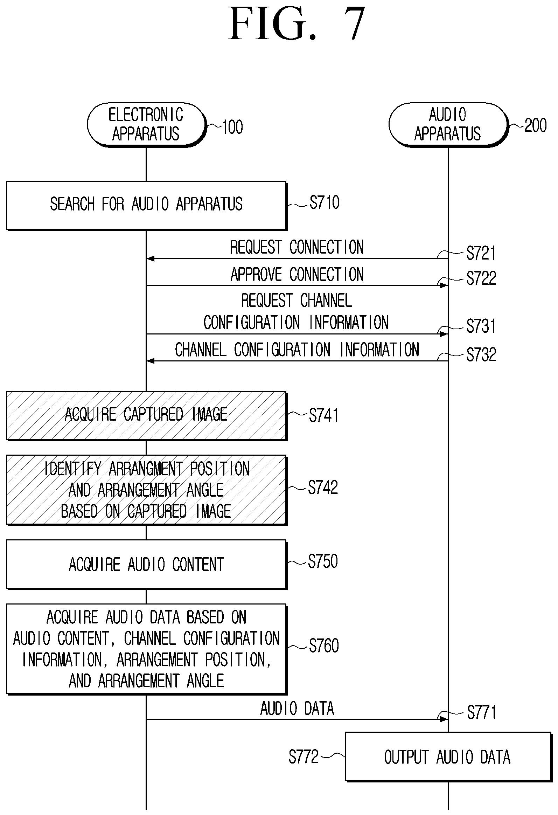

In addition to the position response signal, at least one processor 120 may identify at least one of the arrangement position or the arrangement angle of the audio apparatus 200 using a captured image. This will be described with reference to FIG. 7.

The arrangement position may represent a position (or coordinate) where the audio apparatus 200 is arranged in the space where the electronic apparatus 100 and the audio apparatus 200 exist. The arrangement position may be described as arrangement position information. The arrangement position may represent a position based on a specific position.

For example, the specific position may be a position of the electronic apparatus 100 in the space. When the specific position is the position of the electronic apparatus 100, the arrangement position may represent a relative position of the audio apparatus 200 based on the electronic apparatus 100.

For example, the specific position may be an edge point representing a spatial map. For example, the specific position may be an origin coordinate for defining a three-dimensional space. When the specific position is an edge point in the space, the arrangement position may represent an absolute position of the audio apparatus 200. At least one processor 120 may identify the positions of the electronic apparatus 100 and the audio apparatus 200 as absolute positions, respectively.

The at least one processor 120 may transmit a control command requesting the position response signal to the audio apparatus 200 through the communication interface 130 at a first time point, receive the position response signal from the audio apparatus 200 through the communication interface 130 at a second time point, and identify the arrangement position of the audio apparatus 200 based on the first time point, the second time point, and a transmission speed of the position response signal.

The transmission speed of the response signal may be a preset speed, and the transmission speed of the response signal may be stored in the memory 110. At least one processor 120 may identify a relative distance between the electronic apparatus 100 and the audio apparatus 200 based on the first time point, the second time point, and the transmission speed of the position response signal. At least one processor 120 may identify a first candidate area (or candidate position coordinates) where the audio apparatus 200 may be positioned based on the relative distance. At least one processor 120 may specify the arrangement position of the first candidate area audio apparatus 200 acquired based on the relative distance and the arrangement angle.

The arrangement angle may be an angle representing a direction in which the audio apparatus 200 rotates in space. The arrangement angle may be an angle representing a degree of tilt with respect to a specific axis in space. The arrangement angle may be described as a tilt angle, a rotation angle, an arrangement direction, a rotation direction, an arrangement posture, etc. The arrangement angle may be information representing a direction in which the audio apparatus 200 is arranged.

The electronic apparatus 100 may include a sensor unit. The sensor unit may include at least one of a gyro sensor and an acceleration sensor.

At least one processor 120 may acquire the tilt angle information of the electronic apparatus through the sensor unit. At least one processor 120 may identify the arrangement position and the arrangement angle of the audio apparatus 200 based on the position response signal, the tilt angle information of the electronic apparatus, and the tilt angle information of the audio apparatus 200.

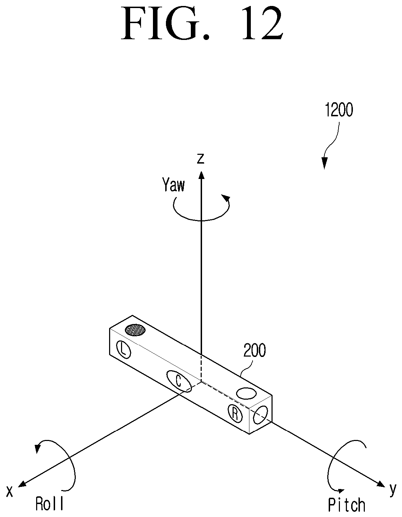

The at least one processor 120 may allow the audio apparatus 200 to acquire a rotation angle (roll, pitch, and yaw) corresponding to three axes (x, y, and z) representing three dimensions based on the tilt angle information, and acquire the arrangement angle of the audio apparatus 200 based on the rotation angle (roll, pitch, and yaw). This will be described with reference to FIG. 12.

At least one processor 120 may represent whether the audio apparatus 200 is arranged in a horizontal state (or horizontal mode) or a vertical state (or vertical mode) based on the rotation angle (roll, pitch, and yaw).

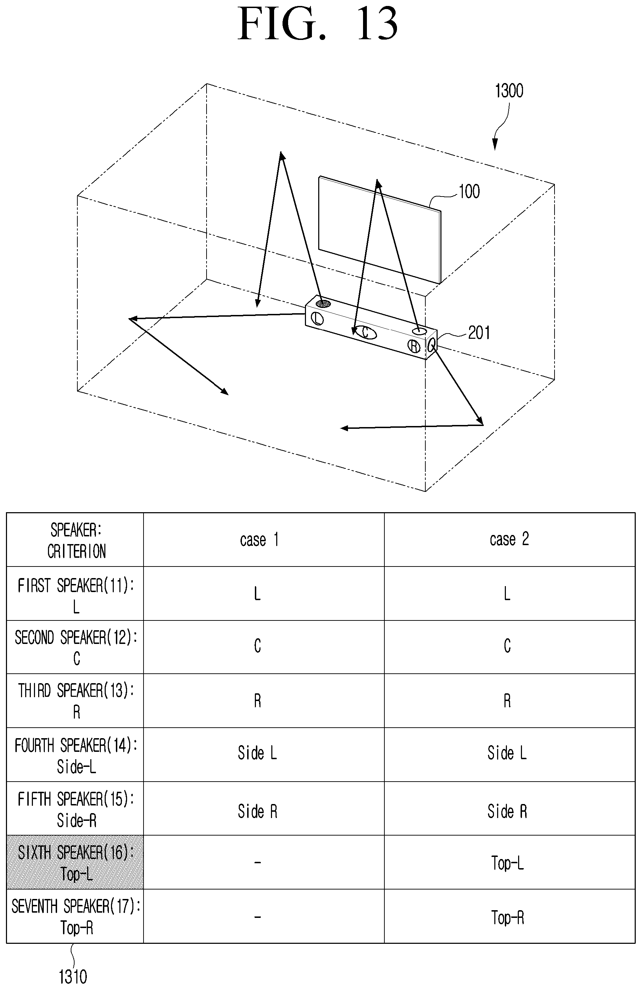

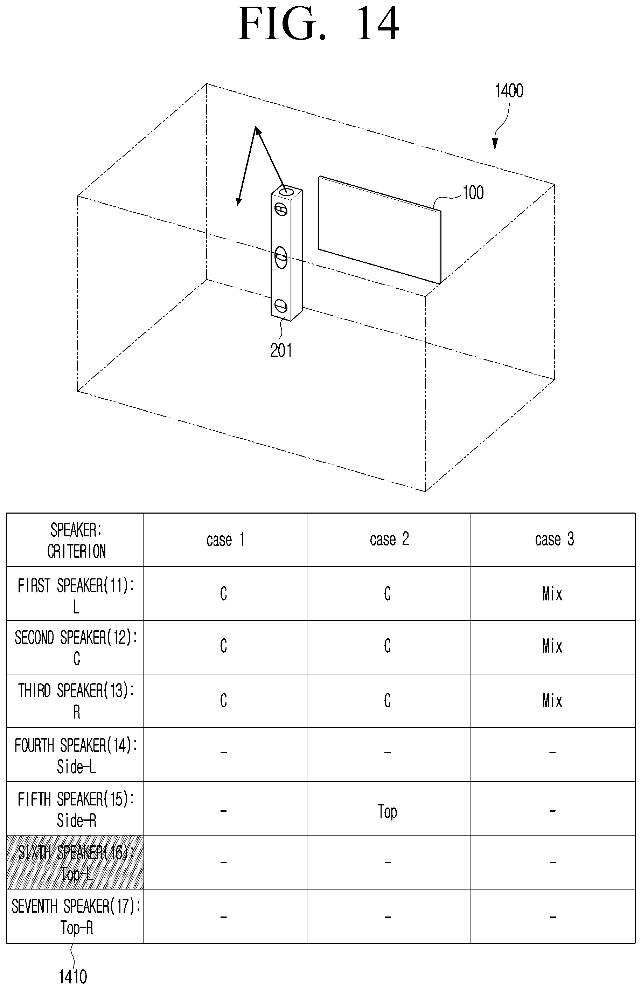

The horizontal state may represent a state arranged in a horizontal direction, like the first audio apparatus 201 of FIG. 13. The vertical state may represent a state arranged in a vertical direction, like the electronic apparatus 100 of FIG. 14.

At least one processor 120 may identify the arrangement state of at least one processor 120 using a roll value among the rotation angles. When the roll value is less than or equal to a threshold angle, at least one processor 120 may identify that the audio apparatus 200 is in a horizontal state. When the roll value exceeds the threshold angle, at least one processor 120 may identify that the audio apparatus 200 is in the horizontal state.

In order to distinguish between the arrangement angle and the arrangement state, the arrangement state may be described as an arrangement direction. The arrangement state may be information acquired based on the arrangement angle.

At least one processor 120 may acquire audio data by additionally considering the arrangement state (or the arrangement direction).

At least one processor 120 may acquire a first angle representing a yaw angle of the electronic apparatus based on the tilt angle information of the electronic apparatus.

At least one processor 120 may acquire a second angle representing a yaw angle of the audio apparatus 200 based on the tilt angle information of the audio apparatus 200.

At least one processor 120 may identify a candidate area (second candidate area) of the audio apparatus 200 based on a difference value between the first angle and the second angle, and may identify the arrangement position of the audio apparatus 200 based on a direction in which the position response signal is output among the candidate areas (second candidate areas).

For example, at least one processor 120 may identify the arrangement position of the audio apparatus 200 based on the first candidate area acquired based on the relative distance.

For example, at least one processor 120 may identify the arrangement position of the audio apparatus 200 based on the second candidate area acquired using the yaw angle.

For example, at least one processor 120 may determine whether the arrangement position of the audio apparatus 200 is identified only by the first candidate area or the second candidate area. When the arrangement position of the audio apparatus 200 is not identified by only one of the first candidate area or the second candidate area, at least one processor 120 may identify the arrangement position of the audio apparatus 200 by using both the first candidate area and the second candidate area.

The audio apparatus 200 may include a first audio apparatus 201 and a second audio apparatus 202. The audio apparatus 200 may be used as a word including a single device or a plurality of devices. The first audio apparatus 201 and the second audio apparatus 202 may be used as words representing a specific device.

At least one processor 120 may acquire first channel configuration information, a first position response signal, and first tilt angle information of the first audio apparatus 201 through the communication interface 130. At least one processor 120 may acquire second channel configuration information, a second position response signal, and second tilt angle information of the second audio apparatus 202 through the communication interface 130.

At least one processor 120 may acquire a first arrangement position of the first audio apparatus 201 based on the first position response signal, and acquire a second arrangement position of the second audio apparatus 202 based on the second position response signal.

At least one processor 120 may acquire a first arrangement angle of the first audio apparatus 201 based on the first tilt angle information, and acquire a second arrangement angle of the second audio apparatus 202 based on the second tilt angle information.

At least one processor 120 may acquire first audio data to be output to the first audio apparatus 201 and second audio data to be output to the second audio apparatus 202 based on the audio content, the first channel configuration information, the first arrangement position, the first arrangement angle, the second channel configuration information, the second arrangement position, and the second arrangement angle.

At least one processor 120 may transmit the first audio data to the first audio apparatus 201 and transmit the second audio data to the second audio apparatus 202 through the communication interface 130.

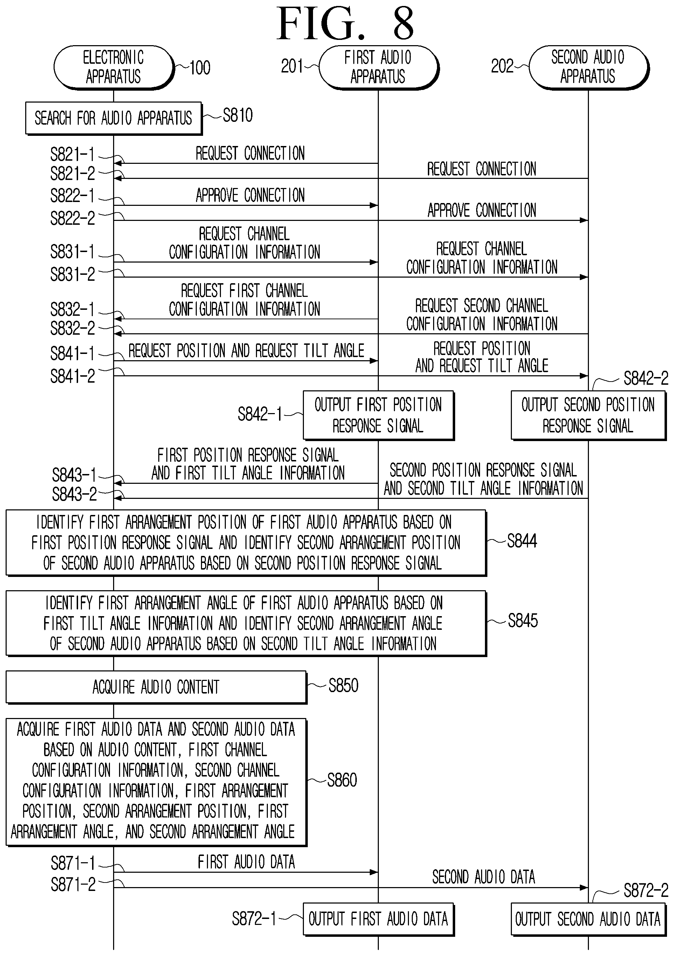

A specific description of using the plurality of audio apparatuses 201 and 202 is disclosed in FIG. 8.

An embodiment of generating audio data provided in an environment where one audio apparatus is arranged is described in FIGS. 13 to 15.

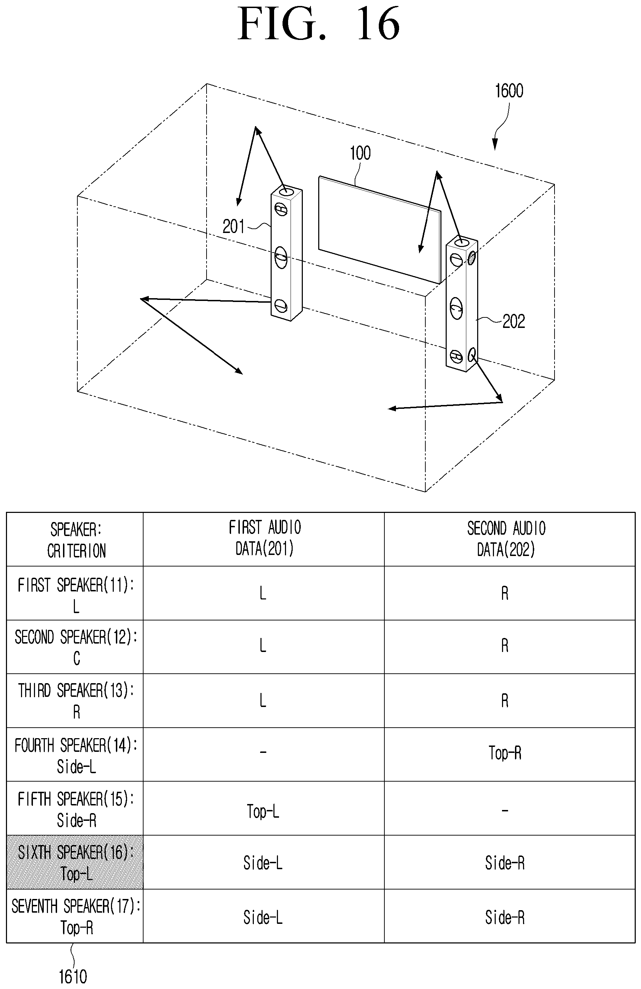

An embodiment of generating audio data provided in an environment where two audio apparatuses are arranged is described in FIGS. 16 to 19.

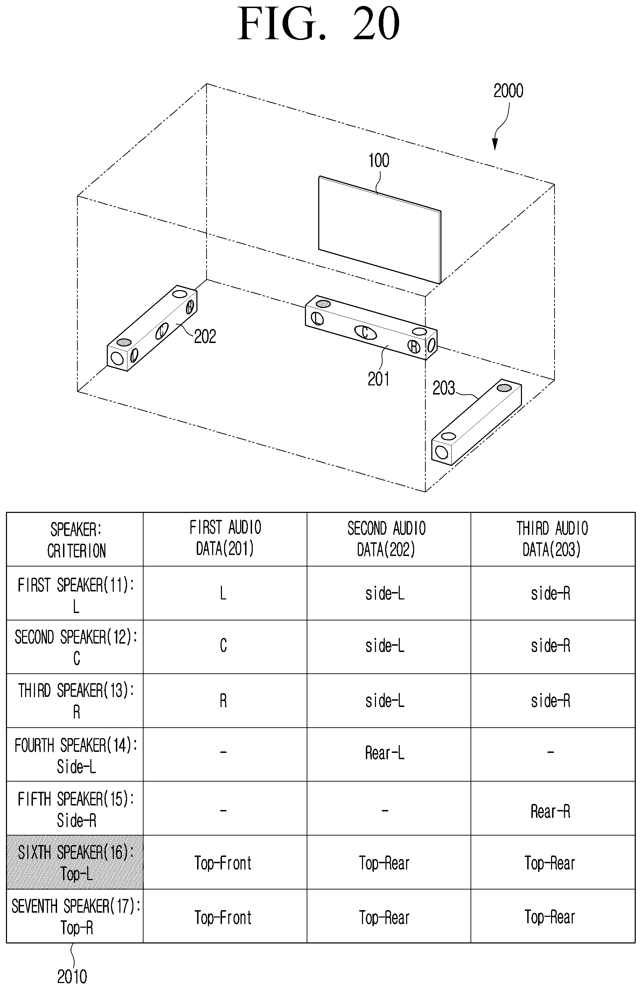

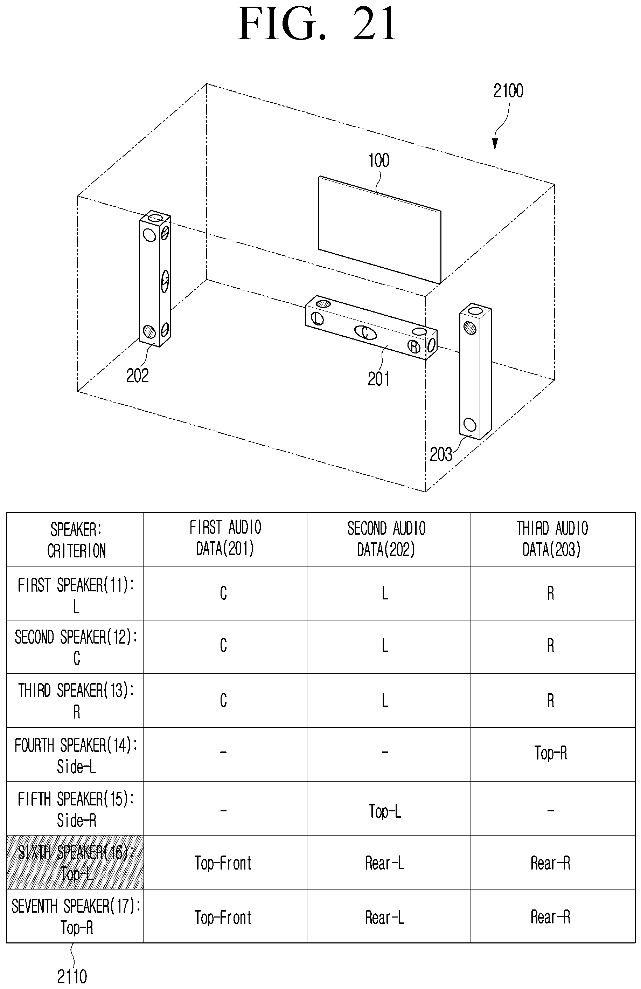

An embodiment of generating audio data provided in an environment where three audio apparatuses are arranged is described in FIGS. 20 and 21.

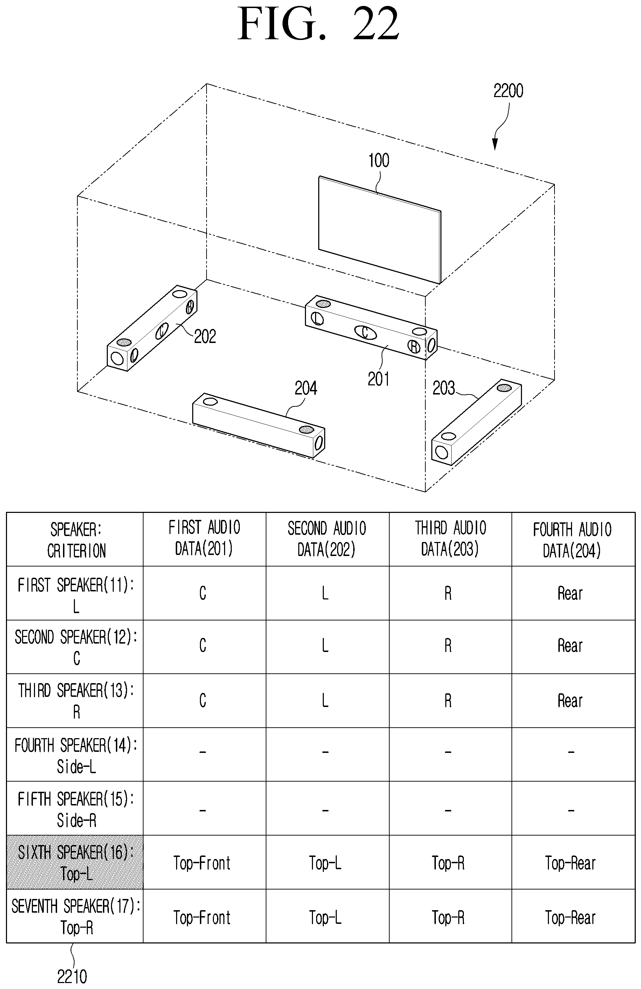

An embodiment of generating audio data provided in an environment where four audio apparatuses are arranged is described in FIGS. 22 to 24.

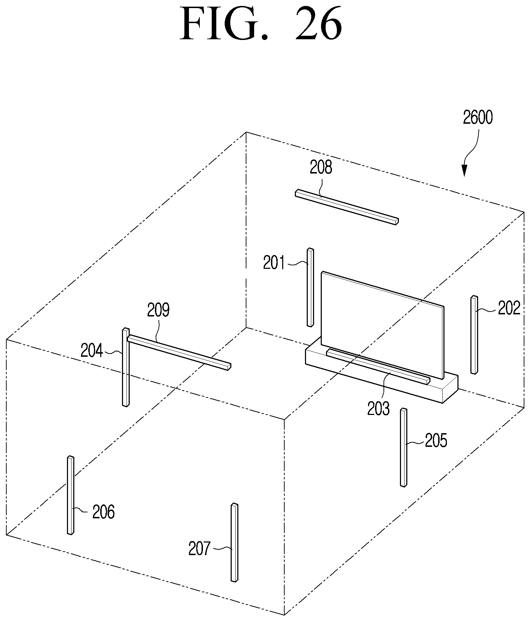

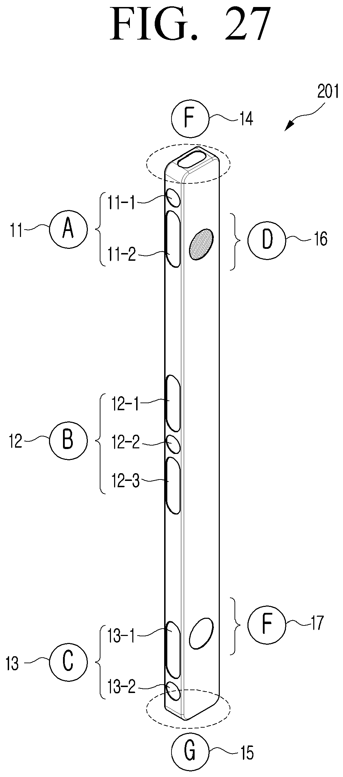

An embodiment of generating audio data provided in an environment where nine audio apparatuses are arranged is described in FIGS. 26 and 27.

According to an embodiment, at least one processor 120 may store channel mapping information for a plurality of arrangement environments in the memory 110. The channel mapping information for the arrangement environments may represent the channel mapping information that provides an optimal audio environment by considering the number of audio apparatuses 200, the arrangement position of the audio apparatus 200, and the arrangement angle of the audio apparatus 200. Tables 1310, 1410, 1510, 1610, 1710, 1810, 1910, 2010, 2110, 2210, 2310, and 2410 described in FIGS. 13 to 24 may represent the channel mapping information that already considers the optimal audio environment.

At least one processor 120 may store the plurality of channel mapping information in the memory 110. At least one processor 120 may acquire the number of audio apparatuses 200 connected to the electronic apparatus 100, the arrangement position of the audio apparatus 200, and the arrangement angle of the audio apparatus 200. At least one processor 120 may identify the channel mapping information corresponding to the current situation among the plurality of channel mapping information stored in the memory 100 based on the number of audio apparatuses 200, the arrangement position, and the arrangement angle. At least one processor 120 may generate the audio data based on the identified channel mapping information and the acquired audio content.

According to various embodiments, the electronic apparatus 100 may automatically recognize the arrangement position and the arrangement angle of the audio apparatus 200 without a human operation of the user, thereby providing an audio channel environment suitable for a user.

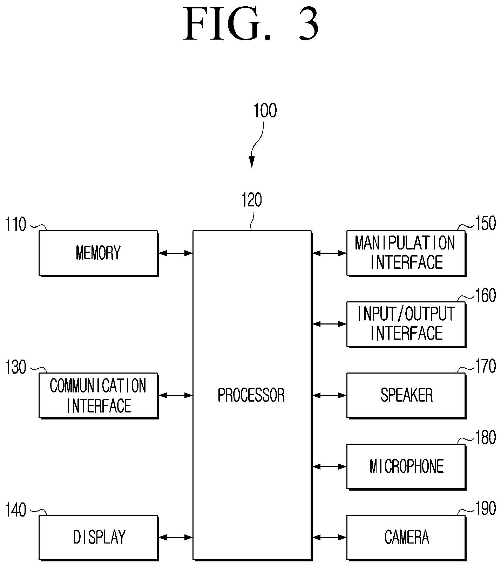

FIG. 3 is a block diagram for explaining a specific configuration of the electronic apparatus 100 of FIG. 2 according to an embodiment.

Referring to FIG. 3, the electronic apparatus 100 may include at least one of the memory 110, at least one processor 120, the communication interface 130, a display 140, an operation interface 150, an input/output interface 160, the speaker 170, a microphone 180, and a camera 190.

The memory 110 may be implemented as an internal memory such as a read-only memory (ROM) (e.g., an electrically erasable programmable read-only memory (EEPROM)), a random access memory (RAM), or the like, included in at least one processor 120 or be implemented as a memory separate from at least one processor 120. The memory 110 may be implemented in a form of a memory embedded in the electronic apparatus 100 or a form of a memory detachable from the electronic apparatus 100, depending on a data storage purpose. For example, data for driving the electronic apparatus 100 may be stored in the memory embedded in the electronic apparatus 100, and data for an extension function of the electronic apparatus 100 may be stored in the memory detachable from the electronic apparatus 100.

The memory embedded in the electronic apparatus 100 may be implemented as at least one of a volatile memory (for example, a dynamic RAM (DRAM), a static RAM (SRAM), a synchronous dynamic RAM (SDRAM), or the like) or a non-volatile memory (for example, a one time programmable ROM (OTPROM), a programmable ROM (PROM), an erasable and programmable ROM (EPROM), an electrically erasable and programmable ROM (EEPROM), a mask ROM, a flash ROM, a flash memory (for example, a NAND flash, a NOR flash or the like), a hard drive, or a solid state drive (SSD)), and the memory attachable to and detachable from the electronic apparatus 100 may be implemented in the form such as a memory card (for example, a compact flash (CF), a secure digital (SD), a micro-SD, a mini-SD, an extreme digital (xD), a multi-media card (MMC), or the like), an external memory (for example, a universal serial bus (USB) memory) connectable to a USB port, or the like.

The memory 110 may store at least one instruction. At least one processor 120 may perform various operations based on the instruction stored in the memory 110.

At least one processor 120 may be implemented as a digital signal processor (DSP), a microprocessor, or a time controller (TCON) processing a digital signal. However, the processor 120 is not limited thereto, and may include one or more of a central processing unit (CPU), a micro controller unit (MCU), a micro processing unit (MPU), a controller, an application processor (AP), a graphics processing unit (GPU) or a communication processor (CP), or an advanced reduced instruction set computer (RISC) machines (ARM) processor, or may be defined by these terms. At least one processor 120 may be implemented by a system-on-chip (SoC) or a large scale integration (LSI) in which a processing algorithm is embedded, or may be implemented in a field programmable gate array (FPGA) form. At least one processor 120 may perform various functions by executing computer executable instructions stored in the memory.

The communication interface 130 is a component performing communication with various types of external apparatuses according to various types of communication manners. The communication interface 130 may include a wireless communication module or a wired communication module. Each communication module may be implemented in the form of at least one hardware chip.

The wireless communication module may be a module that communicates wirelessly with an external device. For example, the wireless communication module may include at least one of a Wi-Fi module, a Bluetooth module, an infrared communication module, or other communication modules.

The Wi-Fi module and the Bluetooth module perform communication in a Wi-Fi method and a Bluetooth method, respectively. When the Wi-Fi module or the Bluetooth module is used, various connection information such as a service set identifier (SSID), a session key, and the like, is first transmitted and received, communication is connected using the connection information, and various information may then be transmitted and received.

The infrared communication module performs communication according to an infrared data association (IrDA) technology of wirelessly transmitting data to a short distance using an infrared ray positioned between a visible ray and a millimeter wave.

Other wireless communication modules may include at least one communication chip performing communication according to various wireless communication standards such as zigbee, 3^{rd} generation (3G), 3^{rd} generation partnership project (3GPP), long term evolution (LTE), LTE advanced (LTE-A), 4^{th} generation (4G), 5^{th} generation (5G), and the like, in addition to the communication manner described above.

The wired communication module may be a module that communicates with an external device in a wired manner. For example, the wired communication module may include at least one of a local area network (LAN) module, an Ethernet module, a pair cable, a coaxial cable, an optical fiber cable, or an ultra wide-band (UWB) module.

According to various embodiments, the communication interface 130 may use the same communication module (for example, the WiFi module) to communicate with an external device such as a remote control and an external server.

According to various embodiments, the communication interface 130 may use different communication modules to communicate with an external device, such as a remote control, and an external server. For example, the communication interface 130 may use at least one of the Ethernet module or the Wi-Fi module to communicate with the external server, and may use the Bluetooth module to communicate with the external device such as the remote control. However, this is only an example, and the communication interface 130 may use at least one of various communication modules in a case in which it communicates with a plurality of external devices or external servers.

The display 140 may be implemented as various types of displays such as a liquid crystal display (LCD), an organic light emitting diode (OLED) display, a plasma display panel (PDP), and the like. A driving circuit, a backlight unit, and the like, that may be implemented in the form such as an amorphous silicon thin film transistor (a-si TFT), a low temperature poly silicon (LTPS) TFT, an organic TFT (OTFT), and the like, may be included in the display 140. Meanwhile, the display 140 may be implemented as a touch screen combined with a touch sensor, a flexible display, a three-dimensional (3D) display, or the like. In addition, the display 140 according to an embodiment of the disclosure may include not only a display panel outputting an image, but also a bezel housing the display panel. In particular, the bezel according to an embodiment of the disclosure may include a touch sensor for sensing a user interaction.

The manipulation interface 150 may be implemented as a device such as a button, a touch pad, a mouse, and a keyboard or may be implemented as a touch screen that may perform both of the abovementioned display function and manipulation input function. The button may be various types of buttons such as a mechanical button, a touch pad, a wheel, and the like, formed in any region such as a front surface portion, a side surface portion, a rear surface portion, and the like, of a body appearance of the electronic apparatus 100.

The input/output interface 160 may be any one of a high definition multimedia interface (HDMI), a mobile high-definition link (MHL), a universal serial bus (USB), a display port (DP), a thunderbolt, a video graphics array (VGA) port, an RGB port, a D-subminiature (D-SUB), or a digital visual interface (DVI). The input/output interface 160 may input/output at least one of an audio signal or a video signal. According to an implementation, the input/output interface 160 may include a port inputting/outputting only an audio signal and a port inputting/outputting only a video signal as separate ports, or may be implemented as a single port inputting/outputting both of an audio signal and a video signal. The electronic apparatus 100 may transmit at least one of audio and video signals to the external device (e.g., an external display device or an external speaker) through the input/output interface 160. An output port included in the input/output interface 160 may be connected to an external device, and the electronic apparatus 100 may transmit at least one of the audio and video signals to the external device through the output port.

The input/output interface 160 may be connected to the communication interface. The input/output interface 160 may transmit information received from an external device to the communication interface, or transmit information received through the communication interface to the external device.

The speaker 170 is a component outputting various notification sounds, a voice message, or the like, as well as various audio data.

The microphone 180 is a component for receiving a user' voice or other sounds and converting the user's voice or other sounds into audio data. The microphone 180 may receive the user voice in an activated state. For example, the microphone 180 may be formed integrally with the electronic apparatus 100 in upper, front, side directions, or the like. The microphone 180 may include various components such as a microphone collecting a user voice having an analog form, an amplifying circuit amplifying the collected user voice, an A/D converting circuit sampling the amplified user voice to convert the amplified user voice into a digital signal, a filter circuit removing a noise component from the converted digital signal, and the like.

The camera 190 is configured to generate a captured image by capturing a subject, in which the captured image is a concept including both a moving image and a still image. The camera 190 may acquire an image of at least one external device, and may be implemented as a camera, a lens, an infrared sensor, or the like.

The camera 190 may include a lens and an image sensor. A type of lens includes a general general-purpose lens, a wide-angle lens, a zoom lens, and the like, and may be determined according to the type, characteristic, use environment, and the like of the electronic apparatus 100. As the image sensor, a complementary metal oxide semiconductor (CMOS), a charge coupled device (CCD), and the like may be used.

FIG. 4 is a diagram for describing the audio apparatus 200 according to an embodiment.

The audio apparatus 200 may include at least one audio apparatus. The audio apparatus 200 may be described as a concept including both singular and plural. In FIG. 4 and the description below, the first audio apparatus 201 is described when specifying one audio apparatus.

The audio apparatus 200 may include at least one speaker. Each speaker may be used to configure a different channel. The channel may represent a type of audio signal. The channel may represent an independent audio signal or a path of an audio signal.

Referring to an embodiment 410 of FIG. 4, the first audio apparatus 201 may include one speaker 12. The first audio apparatus 201 may output audio data configured as one channel through one speaker 12.

Referring to an embodiment 420 of FIG. 4, the first audio apparatus 201 may include a plurality of speakers 11, 12, and 13. The first audio apparatus 201 may include a first speaker **11**, a second speaker 12, and a third speaker 13.

The first speaker 11 may be a speaker that outputs a first channel (e.g., a left channel). The second speaker 12 may be a speaker that outputs a second channel (e.g., a center channel). The third speaker 13 may be a speaker that outputs a third channel (e.g., a right channel).

The first audio apparatus 201 may output audio data including audio signals of three channels through a plurality of speakers 11, 12, and 13. The first audio apparatus 201 may output a first audio signal of the first channel through the first speaker 11. The first audio apparatus 201 may output a second audio signal of the second channel through the second speaker 12. The first audio apparatus 201 may output a third audio signal of the third channel through the third speaker 13.

Referring to an embodiment 430 of FIG. 4, the first audio apparatus 201 may include the plurality of speakers 11, 12, 13, 14, and 15. The first audio apparatus 201 may include the first speaker 11, the second speaker 12, the third speaker 13, the fourth speaker 14, and the fifth speaker 15. Descriptions of the first speaker 11, the second speaker 12, and the third speaker 13 are described in the embodiment 420 of FIG. 4. Redundant descriptions will be omitted.

The fourth speaker 14 may be a speaker that outputs a fourth channel (e.g., a side left channel). The fifth speaker 15 may be a speaker that outputs a fifth channel (e.g., a side right channel).

The first audio apparatus 201 may output audio data including audio signals of five channels through the plurality of speakers 11, 12, 13, 14, and 15. The first audio apparatus 201 may output a fourth audio signal of the fourth channel through the fourth speaker 14. The first audio apparatus 201 may output a fifth audio signal of the fifth channel through the fifth speaker 15.

Referring to an embodiment 440 of FIG. 4, the first audio apparatus 201 may include a plurality of speakers 11, 12, 13, 14, 15, 16, and 17. The first audio apparatus 201 may include the first speaker 11, the second speaker 12, the third speaker 13, the fourth speaker 14, the fifth speaker 15, the sixth speaker 16, and the seventh speaker 17. The descriptions of the first speaker 11, the second speaker 12, the third speaker 13, the fourth speaker 14, and the fifth speaker 15 are described in embodiment 420 of FIG. 4. Redundant descriptions will be omitted.

The sixth speaker 16 may be a speaker that outputs a sixth channel (e.g., an upper left channel). The seventh speaker 17 may be a speaker that outputs a seventh channel (e.g., an upper right channel).

The first audio apparatus 201 may output audio data including audio signals of 7 channels through the plurality of speakers 11, 12, 13, 14, 15, 16, and 17. The first audio apparatus 201 may output a sixth audio signal of the sixth channel through the sixth speaker 16. The first audio apparatus 201 may output a seventh audio signal of the seventh channel through the seventh speaker 17.

The first audio apparatus 201 of embodiment 450 of FIG. 4 may correspond to the first audio apparatus 201 of embodiment 440 of FIG. 4. Redundant descriptions will be omitted. The first audio apparatus 201 may output audio data together with the sub audio apparatus 210. The sub audio apparatus 210 may output a specific audio channel. The sub audio apparatus 210 may include a sub speaker. For example, the sub audio apparatus 210 may include a woofer speaker. The electronic apparatus 100 may transmit separate audio data (or audio signals) to each of the first audio apparatus 201 and the sub audio apparatus 210.

According to an embodiment, when the sub audio apparatus 210 does not exist, the woofer function may be performed through the second speaker 12.

FIG. 5 is a diagram for describing an operation of providing audio data using information related to the arrangement of the audio apparatus 200 according to an embodiment.

Referring to FIG. 5, the electronic apparatus 100 may search for the audio apparatus 200 (S510). The electronic apparatus 100 may search for the audio apparatus 200 connected wirelessly or by wire.

According to an embodiment, the electronic apparatus 100 may perform an operation of searching for a connectable peripheral device, and search (or identify) the audio apparatus 200 that may perform the audio output function among the connectable peripheral devices based on the result of the search. The electronic apparatus 100 may identify the audio apparatus 200 that may perform the audio output function. Whether the audio output function is performed may be acquired by analyzing a signal packet received from the peripheral device during the search process. The signal packet may include information representing whether the audio function exists.

According to an embodiment, the electronic apparatus 100 may perform an operation of searching for a pre-registered peripheral device. When a user performs a pre-registration process, the information representing whether the audio apparatus exists may be stored in the electronic apparatus 100 during the pre-registration process. The electronic apparatus 100 may search for the surrounding audio apparatus 200 to determine whether the pre-registered peripheral device is connectable. The electronic apparatus 100 may analyze information on the pre-registered peripheral device and the signal packet received from the peripheral device to determine whether the pre-registered audio apparatus 200 is connectable.

The electronic apparatus 100 may be connected to the audio apparatus 200 that may perform an audio output function (S520). The electronic apparatus 100 may maintain a connection state in which information may be exchanged with the audio apparatus 200.

The electronic apparatus 100 may acquire the channel configuration information of the audio apparatus 200 (S530). The channel configuration information may represent configuration information for audio channels that the audio apparatus 200 may output. For example, when the audio apparatus 200 includes seven speakers as in embodiment 440 of FIG. 4, the channel configuration information may include mapping information related to seven speakers and seven channels. The mapping information may include information on each channel and each speaker being mapped.

The mapping information may include first information to which the first speaker 11 and the first channel are mapped, second information to which the second speaker 12 and the second channel are mapped, third information to which the third speaker 13 and the third channel are mapped, fourth information to which the fourth speaker 14 and the fourth channel are mapped, fifth information to which the fifth speaker 15 and the fifth channel are mapped, sixth information to which the sixth speaker 16 and the sixth channel are mapped, seventh information to which the seventh speaker 17 and the seventh channel are mapped, etc.

According to an embodiment, the electronic apparatus 100 may use the pre-stored channel configuration information. The electronic apparatus 100 may store the channel configuration information corresponding to the audio apparatus 200. The electronic apparatus 100 may store the channel configuration information corresponding to the audio apparatus 200 in the memory 110. The channel configuration information may include the mapping information corresponding to the audio apparatus 200. The mapping information may be described as the channel mapping information.

The electronic apparatus 100 may store the plurality of channel configuration information. The electronic apparatus 100 may acquire the channel configuration information corresponding to the audio apparatus 200 connected through step S520 among the plurality of channel configuration information.

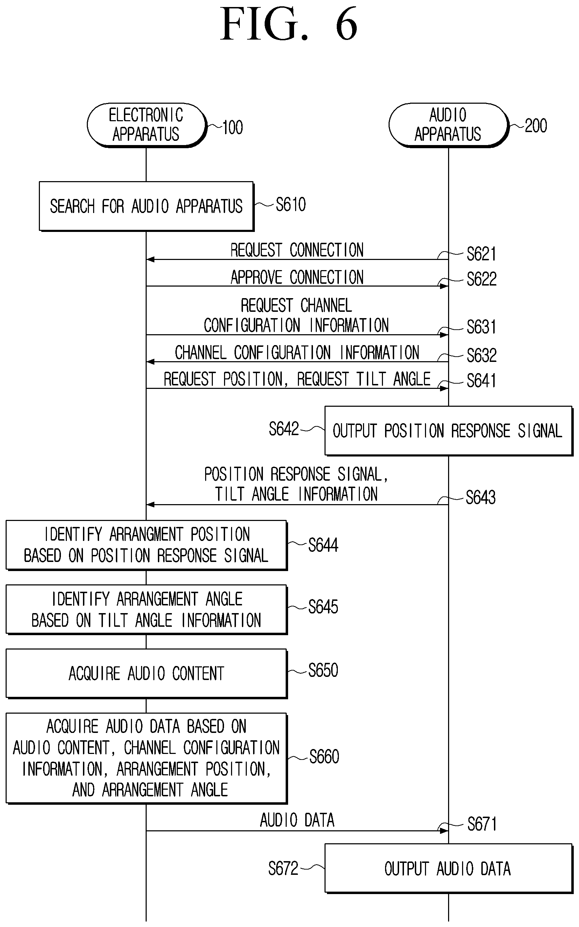

According to an embodiment, the electronic apparatus 100 may directly request the channel configuration information for the audio apparatus 200 connected through step S520. The electronic apparatus 100 may request the channel configuration information from the audio apparatus 200 and receive the channel configuration information from the audio apparatus 200. This will be described with reference to FIG. 6.

The electronic apparatus 100 may identify at least one of the arrangement position or the arrangement angle of the audio apparatus 200 (S540).

The electronic apparatus 100 may acquire the arrangement information related to the audio apparatus 200. The arrangement information may represent various information related to the arrangement of the audio apparatus 200. The arrangement information may include at least one of the arrangement position or the arrangement angle. The electronic apparatus 100 may identify the arrangement position. The electronic apparatus 100 may identify the arrangement angle. The electronic apparatus 100 may identify the arrangement position and the arrangement angle.

The arrangement position may be information representing a location (or coordinate) in which the audio apparatus 200 is arranged in a space.

The arrangement angle may be information representing a direction in which the audio apparatus 200 is arranged. A method of describing the arrangement angle is described in FIG. 12.

Various methods may be used to identify the arrangement position or the arrangement angle of the audio apparatus 200.

According to an embodiment, the electronic apparatus 100 may acquire the arrangement information of the audio apparatus 200 by outputting the test audio signal. The electronic apparatus 100 may transmit the test audio signal to the audio apparatus 200. The audio apparatus 200 may output the test audio signal received from the electronic apparatus 100 through the speaker. The electronic apparatus 100 may receive the test audio signal output from the audio apparatus 200 through the microphone 180. The electronic apparatus 100 may acquire the arrangement information of the audio apparatus 200 by analyzing the test audio signal received through the microphone 180.

The electronic apparatus 100 may acquire a first time point at which the output of the test audio signal is commanded. The electronic apparatus 100 may acquire a second time point at which the test audio signal received through the microphone 180 is acquired. The electronic apparatus 100 may acquire a distance between the electronic apparatus 100 and the audio apparatus 200 by using the difference between the first time point and the second time point.

The electronic apparatus 100 may acquire a first waveform of the output test audio signal. The electronic apparatus 100 may acquire a second waveform of the received test audio signal. The electronic apparatus 100 may compare and analyze the first waveform and the second waveform to determine whether the test audio signal output from the audio apparatus 200 is a direct wave or a reflected wave. When the amplitude of the waveform decreases, the electronic apparatus 100 may determine that the test audio signal output from the audio apparatus 200 is reflected and received.

The electronic apparatus 100 may be controlled to output the test audio signal for each speaker included in the audio apparatus 200. For example, the first audio apparatus 201 of the embodiment 440 of FIG. 4 may include the seven speakers 11, 12, 13, 14, 15, 16, and 17. The electronic apparatus 100 may be controlled to output the test audio signal to each of the seven speakers 11, 12, 13, 14, 15, 16, and 17.

Various methods may be applied to distinguish the test audio signals output from each of the seven speakers 11, 12, 13, 14, 15, 16, and 17.

For example, the electronic apparatus 100 may be controlled to output the test audio signal at different times from each of the plurality of speakers included in the audio apparatus 200. The electronic apparatus 100 may control the time point at which the test audio signals output from each of the seven speakers 11, 12, 13, 14, 15, 16, and 17 are output differently. The electronic apparatus 100 may control the test audio signal to be output through the first speaker 11 at the first time point and the test audio signal to be output through the second speaker 12 at the second time point.

For example, the electronic apparatus 100 may be controlled to output different test audio signals from each of the plurality of speakers included in the audio apparatus 200. The electronic apparatus 100 may control different test audio signals from each of the seven speakers 11, 12, 13, 14, 15, 16, and 17 to be output. The electronic apparatus 100 may control a first test audio signal to be output through the first speaker 11, and a second test audio signal to be output through the second speaker 12. The electronic apparatus 100 may acquire a third time point at which the first test audio signal is received through the microphone 180, and a fourth time point at which the second test audio signal is received through the microphone 180. The electronic apparatus 100 may identify the arrangement angles of the first speaker 11 and the second speaker 12 based on the difference between the third time point and the fourth time point.

The electronic apparatus 100 may identify at least one of the arrangement position or the arrangement angle of the audio apparatus 200 based on at least one of the time point at which the test audio signal is transmitted, the time point at which the test audio signal is received, the waveform of the transmitted test audio signal, and the waveform of the received test audio signal.

According to an embodiment, the electronic apparatus 100 may identify at least one of the arrangement position or the arrangement angle of the audio apparatus 200 by outputting the test communication packet. The electronic apparatus 100 may transmit the test communication packet to the audio apparatus 200. The electronic apparatus 100 may generate a control signal that commands the audio apparatus 200 to transmit the test communication packet. The electronic apparatus 100 may transmit the control signal to the audio apparatus 200. The test communication packet may represent a data packet using wireless short-range communication. For example, the test communication packet may be a packet transmitted using at least one of Bluetooth communication, infrared communication, and Wi-Fi communication.

The audio apparatus 200 may transmit the test communication packet to the electronic apparatus 100 based on the control command received from the electronic apparatus 100. The transmission method may vary.

For example, the audio apparatus 200 may transmit the test communication packet to the electronic apparatus 100 in a direct manner.

For example, the audio apparatus 200 may transmit the test communication packet to the electronic apparatus 100 in an advertising manner.

The electronic apparatus 100 may receive the test communication packet from the audio apparatus 200. The electronic apparatus 100 may include a communication interface 130 for receiving the test communication packet. The electronic apparatus 100 may receive the test communication packet through the communication interface 130. The electronic apparatus **1**00 may identify a reception angle at which the test communication packet is received.

In order to identify the arrangement information of the audio apparatus 200, the plurality of communication interfaces may be used.

For example, the communication interface 130 of the electronic apparatus 100 may include a plurality of communication modules. Each of the plurality of communication modules may receive the test communication packet transmitted by the audio apparatus 200. The communication interface 130 may include a first communication module and a second communication module. The electronic apparatus 100 may acquire a first angle of the test communication packet acquired through the first communication module and a second angle of the test communication packet acquired through the second communication module. The electronic apparatus 100 may identify at least one of the arrangement position or the arrangement angle of the audio apparatus 200 based on the first angle and the second angle.

For example, the audio apparatus 200 may include the plurality of communication modules. Each of the plurality of communication modules may transmit the test communication packet. The audio apparatus 200 may include a third communication module and a fourth communication module. The audio apparatus 200 may transmit the test communication packet at the first time point through the third communication module, and transmit the test communication packet at the second time point through the fourth communication module.

The electronic apparatus 100 may acquire a third angle of the test communication packet received at the third time point and a fourth angle of the test communication packet received at the fourth time point.

The electronic apparatus 100 may identify at least one of the arrangement position or the arrangement angle of the audio apparatus 200 based on the third angle and the fourth angle.

According to various embodiments, the third communication module and the fourth communication module of the audio apparatus 200 may transmit different test communication packets, respectively. When transmitting different communication packets, the third time point and the fourth time point may be the same. This is because it is possible to analyze which module transmits the packet through the waveform analysis.

According to an embodiment, the electronic apparatus 100 may identify at least one of the arrangement position or the arrangement angle of the audio apparatus 200 by capturing the image of the surrounding space. This will be described with reference to FIG. 7.

According to an embodiment, the audio apparatus 200 may include a sensor capable of measuring a tilt. For example, the sensor may be a gyro sensor or an acceleration sensor. The audio apparatus 200 may acquire a tilted angle or a rotated angle of the audio apparatus 200 through the sensor. The audio apparatus 200 may transmit sensing data (or tilt angle information) acquired through the sensor to the electronic apparatus 100. The electronic apparatus 100 may identify the arrangement angle based on the sensing data (or tilt angle information) received from the audio apparatus 200.

The electronic apparatus 100 may acquire the audio content (S550). The electronic apparatus 100 may acquire the audio content to be provided to the audio apparatus 200. For example, the audio content may be specified by a user's selection. For example, the audio content may be content specified by a preset method.

The storage location of the audio content provided by the electronic apparatus 100 may be various.

For example, the electronic apparatus 100 may transmit audio content stored in the memory 110 to the audio apparatus 200.

For example, the electronic apparatus 100 may request audio content from an external server and acquire audio content from the external server.

The electronic apparatus 100 may acquire the audio data based on at least one of the audio content, channel configuration information, arrangement position, or arrangement angle (S560). The audio data may include audio signals corresponding to each channel provided by the audio apparatus 200.

For example, when the audio apparatus 200 is a speaker providing three channels, the audio data may include audio signals (three audio signals) corresponding to each of the three channels.

The electronic apparatus 100 may acquire audio data considering the arrangement position and the arrangement angle of the audio apparatus 200. This is because the output audio channels are different depending on at least one of the arrangement position or the arrangement angle of the audio apparatus 200.

The electronic apparatus 100 may transmit the audio data to the audio apparatus 200 (S570). When there are the plurality of audio apparatuses 200, the plurality of audio data may be transmitted to the audio apparatus 200. The audio apparatus 200 may represent a single device or a plurality of devices.

FIG. 6 is a diagram for describing an operation of generating the audio data for the audio apparatus 200 according to an embodiment.

Steps S610, S650, and S660 of FIG. 6 may correspond to steps S510, S520, S540, and S550 of FIG. 5. Some of the operations of FIG. 6 other than these operations may correspond to steps S520, S530, and S540 of FIG. 5. Redundant descriptions will be omitted.

The audio apparatus 200 may transmit a signal for a connection request to the electronic apparatus 100 (S621). The audio apparatus 200 may transmit a signal for a connection request to the electronic apparatus 100 based on a preset event. The preset event may include at least one of an event of power being turned on or an event of receiving a user input for connection to the electronic apparatus 100.

During the process of searching for the audio apparatus or after completing the search, the electronic apparatus 100 may receive the connection request from the audio apparatus 200. The electronic apparatus 100 may approve the connection in response to the connection request of the audio apparatus 200. The electronic apparatus 100 may transmit a signal for approval of the connection to the audio apparatus 200 (S622). The electronic apparatus 100 and the audio apparatus 200 may be communicatively connected to each other.

The electronic apparatus 100 may request the channel configuration information from the connected audio apparatus 200 (S631). The electronic apparatus 100 may transmit a signal requesting the channel configuration information to the audio apparatus 200.

The audio apparatus 200 may receive a signal requesting the channel configuration information from the electronic apparatus 100. The audio apparatus 200 may transmit the channel configuration information to the electronic apparatus 100 (S632).

The electronic apparatus 100 may receive the channel configuration information from the audio apparatus 200. The electronic apparatus 100 may request at least one of the position or the tilt angle to the audio apparatus 200 (S641). The electronic apparatus 100 may transmit a signal requesting at least one of the position or the tilt angle to the audio apparatus 200.

The audio apparatus 200 may receive a signal requesting at least one of the position or the tilt angle from the electronic apparatus 100. The audio apparatus 200 may output the position response signal in response to the position request (S642).

The position response signal may include at least one of an audio signal and a communication packet. The position response signal may be a test response signal. The position response signal may include at least one of the test audio signal or the test communication packet. This will be described with reference to FIG. 5.

The audio apparatus 200 may receive the tilt angle information in response to a tilt angle request. The audio apparatus 200 may include a sensor (e.g., a gyro sensor, an acceleration sensor, etc.) capable of measuring a tilt (or a degree of rotation). The audio apparatus 200 may currently acquire the tilt angle information including information on the inclination of the audio apparatus 200.

The audio apparatus 200 may transmit at least one of the position response signal or the tilt angle information to the electronic apparatus 100 (S643).

The electronic apparatus 100 may receive at least one of the position response signal or the tilt angle information from the audio apparatus 200. The electronic apparatus 100 may identify the arrangement position based on the position response signal (S644).

The electronic apparatus 100 may identify the arrangement angle based on the tilt angle information (S645). The electronic apparatus 100 may acquire the audio content (S650). The electronic apparatus 100 may acquire (or generate) the audio data based on at least one of the audio content, the channel configuration information, the arrangement position, and the arrangement angle (S660). The electronic apparatus 100 may transmit the audio data to the audio apparatus 200 (S671).

The audio apparatus 200 may receive the audio data from the audio apparatus 200. The audio apparatus 200 may output the audio data (S672).

FIG. 7 is a flowchart for describing an operation of identifying the arrangement information of the audio apparatus 200 through the captured image according to an embodiment.

Steps S710, S721, S722, S731, S732, S750, S760, S771, and S772 of FIG. 7 may correspond to steps S610, S621, S622, S631, S632, S650, S660, S671, and S672 of FIG. 6. Redundant descriptions will be omitted.

The electronic apparatus 100 may acquire a captured image obtained by capturing a space in which the audio apparatus 200 is arranged (S741).

According to an embodiment, the electronic apparatus 100 may include the camera 190. The electronic apparatus 100 may acquire at least one captured image obtained by capturing a surrounding environment through the camera 190. The electronic apparatus 100 may identify at least one of the arrangement position or the arrangement angle of the audio apparatus 200 based on the captured image (S742).

The electronic apparatus 100 may identify an object representing the audio apparatus 200 based on the captured image. When identifying the object representing the audio apparatus 200, appearance information of the audio apparatus 200 may be stored in the memory 110. The electronic apparatus 100 may identify the object representing the audio apparatus 200 in the captured image based on the stored appearance information. The electronic apparatus 100 may identify the arrangement position and the arrangement direction of the identified object as the arrangement position and the arrangement direction of the audio apparatus 200.

The electronic apparatus 100 may perform steps S750, S760, S771, and S772.

FIG. 8 is a sequence diagram for describing the electronic apparatus 100 connected to the plurality of audio apparatuses 201 and 202 according to an embodiment.

Referring to FIG. 8, the audio apparatus 200 may include a plurality of audio apparatuses. The plurality of audio apparatuses may be the first audio apparatus 201 and the second audio apparatus 202.

Steps S810, S850, and S860 of FIG. 8 may correspond to steps S510, S550, and S560 of FIG. 5. Some of the operations of FIG. 8 other than these operations may correspond to steps S520, S530, and S540 of FIG. 5. Some of the operations of FIG. 8 may correspond to the steps described in FIGS. 6 and 7. Redundant descriptions will be omitted.

The electronic apparatus 100 may search for at least one audio apparatus (S810).

The electronic apparatus 100 may search for the first audio apparatus 201 and the second audio apparatus 202. The first audio apparatus 201 may request a connection to the electronic apparatus 100 (S821-1). The second audio apparatus 202 may request a connection to the electronic apparatus 100 (S821-2).

The electronic apparatus 100 may receive a signal for requesting a connection from the first audio apparatus 201. The electronic apparatus 100 may receive a signal for requesting a connection from the second audio apparatus 202. The electronic apparatus 100 may transmit a signal for connection approval to the first audio apparatus 201 (S822-1). The electronic apparatus 100 may transmit a signal for connection approval to the second audio apparatus 202 (S822-2).

The electronic apparatus 100 may transmit a signal for requesting the channel configuration information to the first audio apparatus 201 (S831-1). The electronic apparatus 100 may transmit a signal for requesting the channel configuration information to the second audio apparatus 202 (S831-2).

The first audio apparatus 201 may receive a signal for requesting the channel configuration information from the electronic apparatus 100. The first audio apparatus 201 may transmit the first channel configuration information to the electronic apparatus 100 (S832-1).

The second audio apparatus 202 may receive a signal for requesting the channel configuration information from the electronic apparatus 100. The second audio apparatus 202 may transmit the first channel configuration information to the electronic apparatus 100 (S832-**2**).

The electronic apparatus 100 may receive the first channel configuration information from the first audio apparatus 201. The electronic apparatus 100 may receive the second channel configuration information from the second audio apparatus 202.

The electronic apparatus 100 may transmit a signal for requesting at least one of the position request or the tilt angle to the first audio apparatus 201 (S841-1). The electronic apparatus 100 may transmit a signal for requesting at least one of the position request or the tilt angle to the second audio apparatus 202 (S841-2).

The first audio apparatus 201 may receive a signal for requesting at least one of the position request or the tilt angle from the electronic apparatus 100. The first audio apparatus 201 may output the first position response signal (S842-1). The first audio apparatus 201 may transmit at least one of the first position response signal or the first tilt angle information to the electronic apparatus 100 (S843-1).

The second audio apparatus 202 may receive a signal for requesting at least one of the position request or the tilt angle from the electronic apparatus 100. The second audio apparatus 202 may output the second position response signal (S842-2). The second audio apparatus 202 may transmit at least one of the second position response signal or the second tilt angle information to the electronic apparatus 100 (S843-2).

The electronic apparatus 100 may receive at least one of the first position response signal or the first tilt angle information from the first audio apparatus 201. The electronic apparatus 100 may receive at least one of the second position response signal or the second tilt angle information from the second audio apparatus 202.

The electronic apparatus 100 may identify the first arrangement position of the first audio apparatus 201 based on the first position response signal, and identify the second arrangement position of the second audio apparatus 202 based on the second position response signal (S844).

The electronic apparatus 100 may identify the first arrangement angle of the first audio apparatus 201 based on the first tilt angle information, and identify the second arrangement angle of the second audio apparatus 202 based on the second tilt angle information (S845).

The electronic apparatus 100 may acquire the audio content (S850).

The electronic apparatus 100 may acquire the first audio data and the second audio data based on the audio content, the first channel configuration information, the second channel configuration information, the first arrangement position, the second arrangement position, the first arrangement angle, and the second arrangement angle (S860).

The first audio data may be data to be provided to the first audio apparatus 201. The first audio data may include an audio signal suitable for the first channel configuration information of the first audio apparatus 201.

The second audio data may be data to be provided to the second audio apparatus 202. The second audio data may include an audio signal suitable for the second channel configuration information of the second audio apparatus 202.

The electronic apparatus 100 may transmit the first audio data to the first audio apparatus 201 (S871-1). The electronic apparatus 100 may transmit the second audio data to the second audio apparatus 202 (S871-2).

The first audio apparatus 201 may receive the first audio data from the electronic apparatus 100. The first audio apparatus 201 may output the first audio data (S872-1).

The second audio apparatus 202 may receive the second audio data from the electronic apparatus 100. The second audio apparatus 202 may output the second audio data (S872-2).

FIG. 9 is a sequence diagram for describing a situation in which the arrangement angle of the audio apparatus changes according to an embodiment.

Steps S971-1, S971-2, S972-1, and S972-2 of FIG. 9 may correspond to steps S871-1, S871-2, S872-1, and S872-2 of FIG. 8. Redundant descriptions will be omitted. The embodiment of FIG. 9 assumes a situation in which the arrangement position of the second audio apparatus 202 is maintained and only the arrangement angle changes.

The first audio apparatus 201 or the second audio apparatus 202 may acquire (or track) the tilt angle in real time. The first audio apparatus 201 or the second audio apparatus 202 may identify whether the tilt angle changes by the threshold angle or more (S980). In FIG. 9, it is assumed and described that the tilt angle of the second audio apparatus 202 changes.

When the tilt angle does not change by the threshold angle or more (S980-N), the second audio apparatus 202 repeatedly tracks the tilt angle in real time.

When the tilt angle changes by the threshold angle or more (S980-Y), the second audio apparatus 202 may transmit a third tilt angle information including the changed tilt angle to the electronic apparatus 100 (S981).

The electronic apparatus 100 may receive the third tilt angle information from the second audio apparatus 202. The electronic apparatus 100 may identify a third arrangement angle based on the third tilt angle information (S982).

The electronic apparatus 100 may acquire third audio data and fourth audio data based on at least one of audio content, the first channel configuration information, the second channel configuration information, the first arrangement position, the second arrangement position, the first arrangement angle, and the third arrangement angle.

The third audio data may include the audio signal to be provided to the first audio apparatus 201. The fourth audio data may include the audio signal to be provided to the second audio apparatus 202.

The third audio data and the fourth audio data may be data reflecting the changed arrangement angle of the second audio apparatus 202. Even if the arrangement angle of the second audio apparatus 202 changes, since the overall sound management method may change, new audio data needs to be provided to both the first audio apparatus 201 and the second audio apparatus 202.

The electronic apparatus 100 may transmit the third audio data to the first audio apparatus 201 (S991-1). The electronic apparatus 100 may transmit the fourth audio data to the second audio apparatus 202 (S991-2).

The first audio apparatus 201 may receive the third audio data from the electronic apparatus 100. The first audio apparatus 201 may output the third audio data (S992-1).

The second audio apparatus 202 may receive the fourth audio data from the electronic apparatus 100. The second audio apparatus 202 may output the fourth audio data (S992-2).

FIG. 10 is a sequence diagram for describing a situation in which the arrangement position and the arrangement angle of the specific audio apparatus change according to an embodiment.

Steps S1071-1, S1071-2, S1072-1, S1072-2, S1080, S1091-2, S1091-2, S1092-1, S1092-2 of FIG. 10 may correspond to steps S971-1, S971-2, S972-1, S972-2, S980, S991-2, S991-2, S**992**-1, S992-2 of FIG. 9. Redundant descriptions will be omitted.

When the tilt angle changes by the threshold angle or more (S1080-Y), the second audio apparatus 202 may output a third position response signal (S1081). The second audio apparatus 202 may transmit at least one of the third position response signal or the third tilt angle information to the electronic apparatus 100 (S1082).

The electronic apparatus 100 may receive at least one of the third position response signal or the third tilt angle information from the second audio apparatus 202. The electronic apparatus 100 may identify the third arrangement position of the second audio apparatus 202 based on the third position response signal (S1083). The electronic apparatus 100 may identify the third arrangement angle of the second audio apparatus 202 based on the third tilt angle information (S1084).

The electronic apparatus 100 may acquire the third audio data and the fourth audio data based on at least one of audio content, the first channel configuration information, the second channel configuration information, the first arrangement position, the third arrangement position, the first arrangement angle, and the third arrangement angle.

The third audio data may include the audio signal to be provided to the first audio apparatus 201. The fourth audio data may include the audio signal to be provided to the second audio apparatus 202.

The electronic apparatus 100, the first audio apparatus 201, and the second audio apparatus 202 may perform steps S1091-2, S1091-2, S1092-1, and S1092-2.

FIG. 11 is a sequence diagram for describing the arrangement angle according to an embodiment.

The steps S1171-1, S1171-2, S1172-1, and S1172-2 of FIG. 11 may correspond to the steps S871-1, S871-2, S872-1, and S872-2 of FIG. 8. Redundant descriptions will be omitted.

The second audio apparatus 202 may determine whether a preset event has been identified as occurring. When the preset event occurs, the second audio apparatus 202 may transmit a notification representing that the preset event has occurred to the electronic apparatus 100 (S1180).

The preset event may include at least one of an event in which a power-off command is received or an event in which an error occurs.

The electronic apparatus 100 may receive the notification representing that the preset event has occurred from the second audio apparatus 202.

The electronic apparatus 100 may identify whether the preset event related to the second audio apparatus 202 has been identified (S1181).

The preset event related to the second audio apparatus 202 may include at least one of the event in which the power-off command is received or the event in which the error has occurred.

The event determined by the electronic apparatus 100 may additionally include an event in which the connection with the second audio apparatus 202 is lost. When the connection with the second audio apparatus 202 is suddenly lost, the second audio apparatus 202 may not transmit the notification to the electronic apparatus 100. The electronic apparatus 100 may determine that a preset event related to a specific device has been identified when the connection with the specific device is lost.

It is assumed that the preset event related to the second audio apparatus 202 has occurred. It is assumed that the electronic apparatus 100 may not output the audio signal using the second audio apparatus 202. The electronic apparatus 100 may output the audio signal only using the first audio apparatus 201, excluding the second audio apparatus 202. For this purpose, the electronic apparatus 100 may reallocate the audio signal.

The electronic apparatus 100 may acquire fifth audio data based on at least one of the audio content, the first channel configuration information, the first arrangement position, and the first arrangement angle (S1182).

The fifth audio data may include the audio signal provided to the first audio apparatus 201. The electronic apparatus 100 may transmit the fifth audio data to the first audio apparatus 201 (S1191).

The first audio apparatus 201 may receive the fifth audio data from the electronic apparatus 100. The first audio apparatus 201 may output the fifth audio data (S1192).

FIG. 12 is a diagram for describing an operation of outputting audio data through one audio apparatus according to an embodiment.

An embodiment 1200 of FIG. 12 is a graph defining rotation directions along the x, y, and z axes. Rotation about the x-axis may be defined as roll, rotation about the y-axis may be defined as pitch, and rotation about the z-axis may be defined as yaw. Each of the x-axis, y-axis, and z-axis may be perpendicular to each other.

The x-axis rotation information may correspond to roll that rotates based on the x-axis. The y-axis rotation information may correspond to pitch that rotates based on a y-axis of a projection surface 10. The z-axis rotation information may correspond to yaw that rotates based on a z-axis of the projection surface 10.

The x-axis rotation information may be described as first-axis rotation information. The y-axis rotation information may be described as second-axis rotation information. The z-axis rotation information may be described as third-axis rotation information. The rotation information may be described as rotation angle information, tilt information, the tilt angle information, etc.

The audio apparatus 200 may include the sensor unit. The audio apparatus 200 may sense the tilt angle of the audio apparatus 200 through the sensor unit. The audio apparatus 200 may acquire sensing data through the sensor unit. The audio apparatus 200 may acquire the tilt angle information of the audio apparatus 200 based on the sensing data. The sensor unit may include at least one of a gravity sensor, an acceleration sensor, or a gyro sensor.

Referring to FIGS. 13 to 15, the electronic apparatus 100 and the first audio apparatus 201 may perform communication. The electronic apparatus 100 may output an audio signal through the first audio apparatus 201. The first audio apparatus 201 may correspond to a 7-channel audio apparatus of the embodiment 440 of FIG. 4.

The electronic apparatus 100 may acquire the first arrangement position and the first arrangement angle of the first audio apparatus 201. The electronic apparatus 100 may acquire the first audio data to be output from the first audio apparatus 201 based on the audio content, the first channel configuration information, the first arrangement position, and the first arrangement angle.

The electronic apparatus 100 may generate the first audio data including a plurality of audio signals considering 7 speakers. The electronic apparatus 100 may transmit the first audio data to the first audio apparatus 201. The first audio apparatus 201 may output the first audio data.

FIG. 13 is a diagram for describing an operation of outputting audio data through one audio apparatus according to an embodiment.

Referring to an embodiment 1300 of FIG. 13, the first audio apparatus 201 is arranged at a specific angle (e.g., roll(0), pitch(0), yaw(0)) below the electronic apparatus 100 and may be arranged toward the center of the space. A criterion for a specific angle may be based on the arrangement position and the arrangement angle of the first audio apparatus 201 of the embodiment 1300 of FIG. 13.

Referring to Table 1310, according to an embodiment, the electronic apparatus 100 may acquire audio data by assigning a left channel L to the first speaker 11, a center channel C to the second speaker 12, a right channel R to the third speaker 13, a side-left channel Side-L to the fourth speaker 14, and a side-right channel Side-R to the fifth speaker 15, and not assigning any channel to the sixth speaker 16 and the seventh speaker 17.

According to an embodiment, the electronic apparatus 100 may acquire audio data by assigning the left channel L to the first speaker 11, the center channel C to the second speaker 12, the right channel R to the third speaker 13, the side-left channel Side-L to the fourth speaker 14, the side-right channel Side-R to the fifth speaker 15, a top-left channel Top-L to the sixth speaker 16, and a top-right channel Top-R to the seventh speaker 17.

The left channel L may be replaced with a front-left channel Front-L, the center channel C may be replaced with a front-center channel Front-C, and the right channel R may be replaced with a front-right channel Front-R, respectively. The same may be applied in the following description.

FIG. 14 is a diagram for describing an operation of outputting audio data through one audio apparatus according to an embodiment.

Referring to an embodiment 1400 of FIG. 14, the first audio apparatus 201 is arranged at a specific angle (e.g., roll(90), pitch(0), yaw(0)) below the electronic apparatus 100 and may be arranged toward the center of the space. The fourth speaker 14 may be in contact with a floor surface.

Referring to table 1410, according to an embodiment, the electronic apparatus 100 may acquire audio data by assigning the center channel C to the first speaker 11, the center channel C to the second speaker 12, the center channel C to the third speaker 13, and not assigning any channel to the fourth speaker 14, the fifth speaker 15, the sixth speaker 16, and the seventh speaker 17.

According to an embodiment, the electronic apparatus 100 may acquire audio data by assigning the center channel C to the first speaker 11, the center channel C to the second speaker 12, the center channel C to the third speaker 13, a top channel Top to the fifth speaker 15, and not assigning any channel to the fourth speaker 14, the sixth speaker 16, and the seventh speaker 17.

According to another implementation example, the electronic apparatus 100 may assign the top channel Top to the fourth speaker 14. Although the fourth speaker 14 is in contact with the floor surface, the same channel may be assigned to the fourth speaker 14 and the fifth speaker 15 in order to minimize errors in data processing speed or the arrangement direction.

According to an embodiment, the electronic apparatus 100 may acquire audio data by assigning a mixed channel Mix to the first speaker 11, the mixed channel Mix to the second speaker 12, the mixed channel Mix to the third speaker 13, and not assigning any channel to the fourth speaker 14, the fifth speaker 15, the sixth speaker 16, and the seventh speaker 17.

The mixed channel Mix may be a channel including components of the left channel L, the center channel C, and the right channel R. The electronic apparatus 100 may generate the mixed channel Mix by combining audio signals of each of the left channel L, the center channel C, and the right channel R.

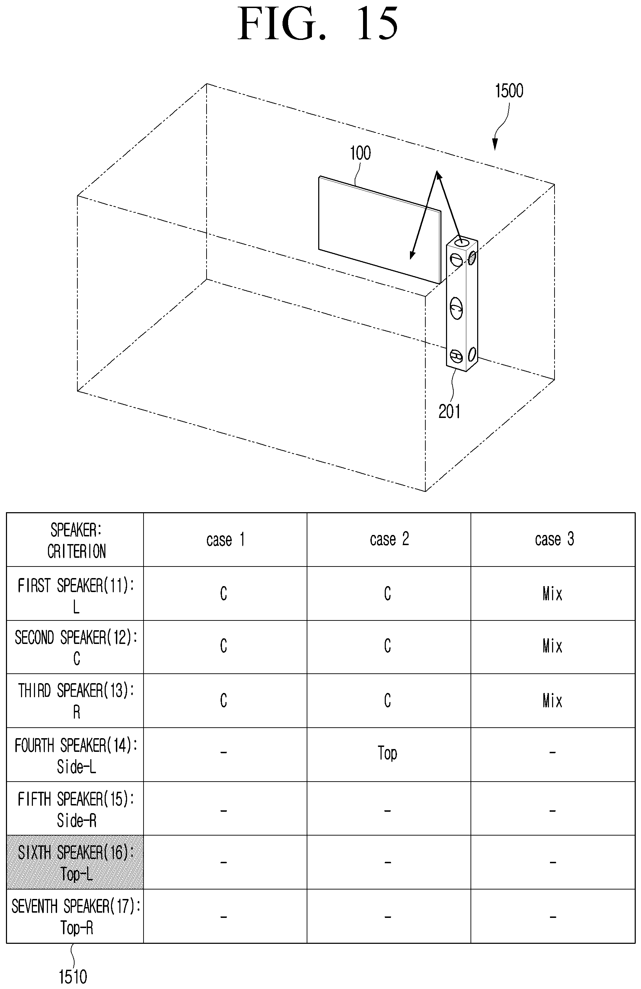

FIG. 15 is a diagram for describing an operation of outputting audio data through two audio apparatuses according to an embodiment.

Referring to an embodiment 1500 of FIG. 15, the first audio apparatus 201 is arranged at a specific angle (e.g., roll(-90), pitch(0), yaw(0)) below the electronic apparatus 100 and may be arranged toward the center of the space. The fifth speaker 15 may be in contact with the floor surface.

Referring to table 1510, according to an embodiment, the electronic apparatus 100 may acquire audio data by assigning the center channel C to the first speaker 11, the center channel C to the second speaker 12, the center channel C to the third speaker 14, and not assigning any channel to the fourth speaker 14, the fifth speaker 15, the sixth speaker 16, and the seventh speaker 17.

According to an embodiment, the electronic apparatus 100 may acquire audio data by assigning the center channel C to the first speaker 11, the center channel C to the second speaker 12, the center channel C to the third speaker 14, the top channel Top to the fourth speaker 14, and not assigning any channel to the fifth speaker 15, the sixth speaker 16, and the seventh speaker 17.

According to another implementation example, the electronic apparatus 100 may assign the top channel Top to the fifth speaker 15. Although the fifth speaker 15 is in contact with the floor surface, the same channel may be assigned to the fourth speaker 14 and the fifth speaker 15 in order to minimize errors in data processing speed or the arrangement direction.

According to an embodiment, the electronic apparatus 100 may acquire audio data by assigning a mixed channel Mix to the first speaker 11, the mixed channel Mix to the second speaker 12, the mixed channel Mix to the third speaker 14, and not assigning any channel to the fourth speaker 14, the fifth speaker 15, the sixth speaker 16, and the seventh speaker 17.

The mixed channel Mix may be a channel including components of the left channel L, the center channel C, and the right channel R. The electronic apparatus 100 may generate the mixed channel Mix by combining audio signals of each of the left channel L, the center channel C, and the right channel R.

Referring to FIGS. 16 to 19, the electronic apparatus 100 may be connected to the first audio apparatus 201 and the second audio apparatus 202. The electronic apparatus 100 may output the audio signal through the first audio apparatus 201 and the second audio apparatus 202. The first audio apparatus 201 and the second audio apparatus 202 may correspond to the 7-channel audio apparatus of the embodiment 440 of FIG. 4.

The electronic apparatus 100 may acquire various types of information related to the first audio apparatus 201 and the second audio apparatus 202. The electronic apparatus 100 may acquire the first channel configuration information, the first arrangement position, and the first arrangement angle of the first audio apparatus 201. The electronic apparatus 100 may acquire the second channel configuration information, the second arrangement position, and the second arrangement angle of the second audio apparatus 202.

The electronic apparatus 100 may acquire the first audio data to be output from the first audio apparatus 201 and the second audio data to be output from the second audio apparatus 202 based on the audio content, the first channel configuration information, the first arrangement position, the first arrangement angle, the second channel configuration information, the second arrangement position, and the second arrangement angle. The electronic apparatus 100 may transmit the first audio data to the first audio apparatus 201. The electronic apparatus 100 may transmit the second audio data to the second audio apparatus 202.

FIG. 16 is a diagram for describing an operation of outputting audio data through two audio apparatuses according to an embodiment.

Referring to an embodiment 1600 of FIG. 16, the first audio apparatus 201 may be arranged at a specific angle (e.g. roll (90), pitch (0), yaw (0)) to the left of the electronic apparatus 100 based on a direction facing the electronic apparatus 100, and a second audio apparatus 202 may be arranged at a specific angle (e.g. roll (-90), pitch (0), yaw (0)) to the right of the electronic apparatus 100. The first audio apparatus 201 and the second audio apparatus 202 may be arranged toward the center of the space. The fourth speaker 14 of the first audio apparatus 201 and the fifth speaker 15 of the second audio apparatus 202 may be in contact with the floor surface.

Referring to Table 1610, according to an embodiment, the electronic apparatus 100 may acquire the first audio data by assigning the left channel L to the first speaker 11, the left channel L to the second speaker 12, the left channel L to the third speaker 13, the top-left channel Top-L to the fifth speaker 15, the side-left channel Side-L to the sixth speaker 16, the side-left channel Side-L to the seventh speaker 17, and not assigning any channel to the fourth speaker 14.

According to an embodiment, the electronic apparatus 100 may acquire the second audio data by assigning a right channel R to the first speaker 11, the right channel R to the second speaker 12, the right channel R to the third speaker 13, the top-right channel Top-R to the fourth speaker 14, the side-right channel Side-R to the sixth speaker 16, the side-right channel Side-R to the seventh speaker 17, and not assigning any channel to the fifth speaker 15.

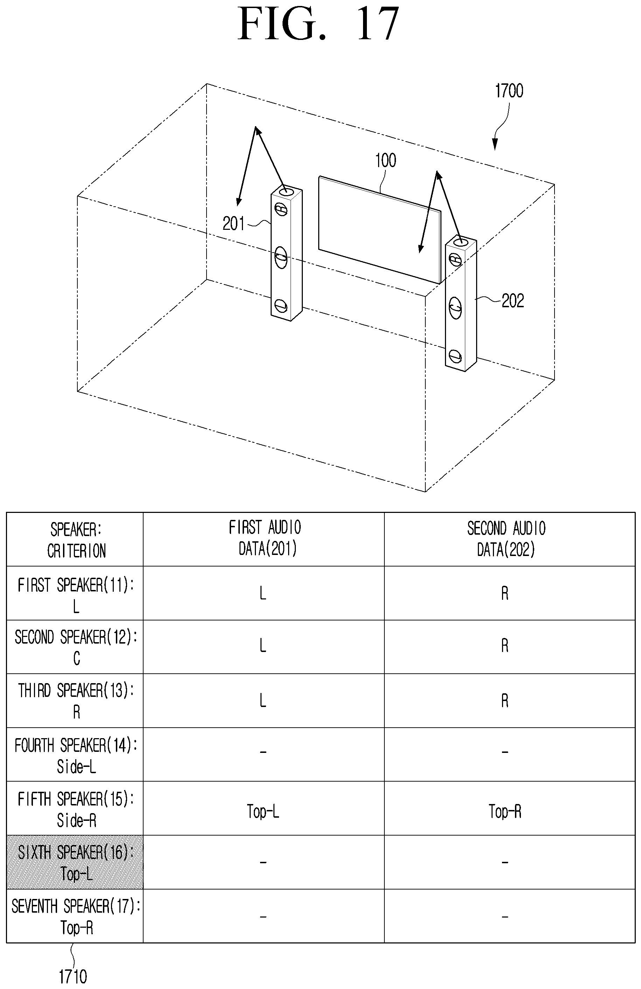

FIG. 17 is a diagram for describing an operation of outputting audio data through two audio apparatuses according to an embodiment.

Referring to an embodiment 1700 of FIG. 17, the first audio apparatus 201 may be arranged at a specific angle (e.g. roll (90), pitch (0), yaw (0)) to the left of the electronic apparatus 100 based on a direction facing the electronic apparatus 100, and a second audio apparatus 202 may be arranged at a specific angle (e.g. roll (90), pitch (0), yaw (0)) to the right of the electronic apparatus 100. The first audio apparatus 201 and the second audio apparatus 202 may be arranged toward the center of the space. The fourth speaker 14 of the first audio apparatus 201 and the fourth speaker 14 of the second audio apparatus 202 may be in contact with the floor surface.

Referring to Table 1710, according to an embodiment, the electronic apparatus 100 may acquire the first audio data by assigning the left channel L to the first speaker 11, the left channel L to the second speaker 12, the left channel L to the third speaker 13, the top left channel Top-L to the fifth speaker 15, and not assigning any channel to the fourth speaker 14, the sixth speaker 16, and the seventh speaker 17.

According to an embodiment, the electronic apparatus 100 may acquire the second audio data by assigning the left channel L to the first speaker 11, the left channel L to the second speaker 12, the left channel L to the third speaker 13, the top right channel Top-R to the fifth speaker 15, and not assigning any channel to the fourth speaker 14, the sixth speaker 16, and the seventh speaker 17.

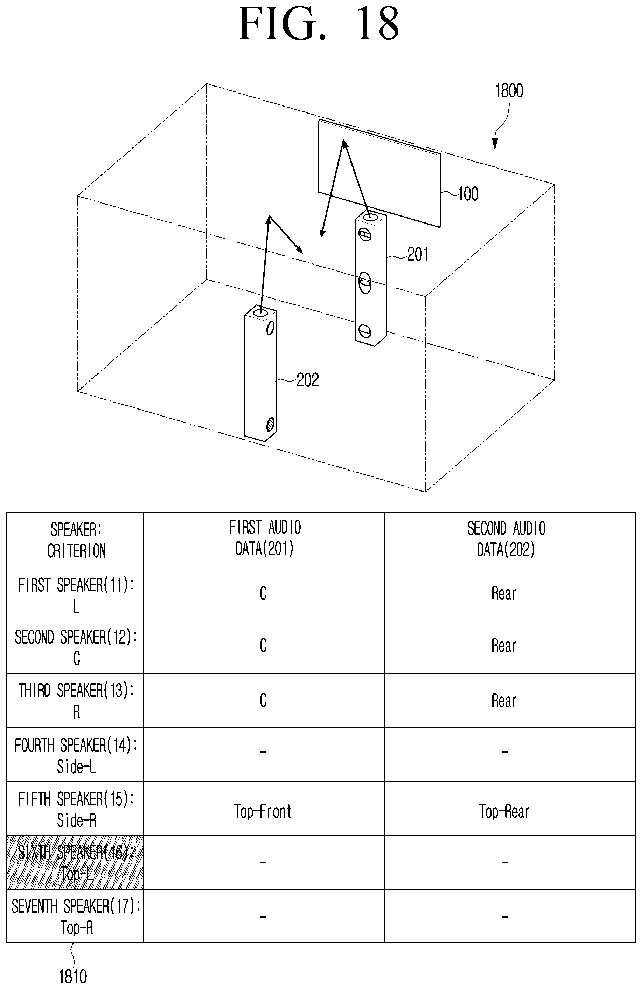

FIG. 18 is a diagram for describing an operation of outputting audio data through two audio apparatuses according to an embodiment.

Referring to an embodiment 1800 of FIG. 18, the first audio apparatus 201 may be arranged at a specific angle (e.g., roll (90), pitch (0), yaw (0)) below the electronic apparatus 100, and the second audio apparatus 202 may be arranged at a specific angle (e.g., roll (90), pitch (0), yaw 180) on an opposite surface of a wall surface where the electronic apparatus 100 is arranged. The first audio apparatus 201 and the second audio apparatus 202 may be arranged toward the center of the space. The fourth speaker 14 of the first audio apparatus 201 and the fourth speaker 14 of the second audio apparatus 202 may be in contact with the floor surface.

Referring to Table 1810, according to an embodiment, the electronic apparatus 100 may acquire the first audio data by assigning the center channel C to the first speaker 11, the center channel C to the second speaker 12, the center channel C to the third speaker 13, a top-front channel Top-Front to the fifth speaker 15, and not assigning any channel to the fourth speaker 14, the sixth speaker 16, and the seventh speaker 17.

According to an embodiment, the electronic apparatus 100 may acquire the second audio data by assigning a rear channel Rear to the first speaker 11, a rear channel Rear to the second speaker 12, a rear channel Rear to the third speaker 13, and a top-rear channel Top-Rear to the fifth speaker 15, and not assigning any channel to the fourth speaker 14, the sixth speaker 16, and the seventh speaker 17.

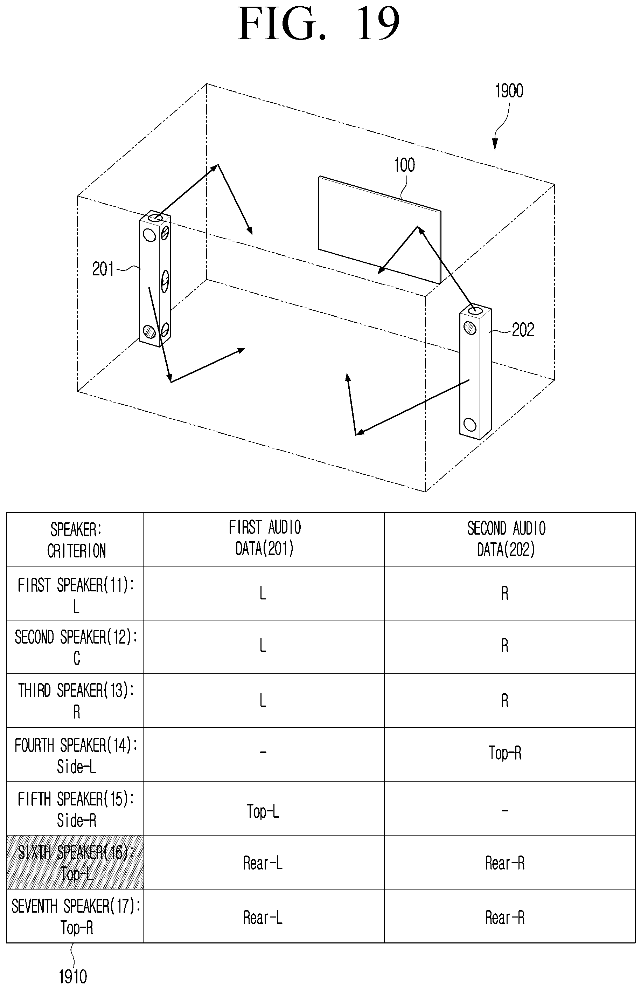

FIG. 19 is a diagram for describing an operation of outputting audio data through two audio apparatuses according to an embodiment.

Referring to an embodiment 1900 of FIG. 19, the first audio apparatus 201 is arranged at a specific angle (e.g., roll (90), pitch (0), yaw (90)) by contacting a right side surface of the wall surface where the electronic apparatus 100 is arranged, and the second audio apparatus 202 may be arranged at a specific angle (e.g., roll (-90), pitch (0), yaw (-90)) on the opposite surface of the wall surface where the electronic apparatus 100 is arranged. The first audio apparatus 201 and the second audio apparatus 202 may be arranged toward the center of the space. The fourth speaker 14 of the first audio apparatus 201 and the fifth speaker 15 of the second audio apparatus 202 may be in contact with the floor surface.

Referring to Table 1910, according to an embodiment, the electronic apparatus 100 may acquire the first audio data by assigning the left channel L to the first speaker 11, the left channel L to the second speaker 12, the left channel L to the third speaker 13, the top-left channel Top-L to the fifth speaker 15, the rear-left channel Rear-L to the sixth speaker 16, the rear-left channel Rear-L to the seventh speaker 17, and not assigning any channel to the fourth speaker 14.

According to an embodiment, the electronic apparatus 100 may acquire the second audio data by assigning the right channel R to the first speaker 11, the right channel R to the second speaker 12, the right channel R to the third speaker 13, the top-right channel Top-R to the fourth speaker 14, the rear-right channel Rear-R to the sixth speaker 16, the rear-right channel Rear-R to the seventh speaker 17, and not assigning any channel to the fifth speaker 15.

FIG. 20 is a diagram for describing an operation of outputting audio data through three audio apparatuses according to an embodiment.

Referring to an embodiment 2000 of FIG. 20, the electronic apparatus 100 may be connected to the first audio apparatus 201, the second audio apparatus 202, and the third audio apparatus 203. The electronic apparatus 100 may output the audio signal through the first audio apparatus 201, the second audio apparatus 202, and the third audio apparatus 203. The first audio apparatus 201, the second audio apparatus 202, and the third audio apparatus 203 may correspond to the audio apparatus of the 7-channel embodiment 440 of FIG. 4. The first audio apparatus 201 may be arranged at a specific angle (e.g., roll(0), pitch(0), yaw(0)) below the electronic apparatus 100. The second audio apparatus 202 may be positioned at a specific angle (e.g., roll(0), pitch(0), yaw(90)) on a left side surface of the wall surface where the electronic apparatus 100 is positioned based on the direction facing the electronic apparatus 100. The third audio apparatus 203 may be positioned at a specific angle (e.g., roll(0), pitch(0), yaw(-90)) on a right side surface of the wall surface where the electronic apparatus 100 is positioned based on the direction facing the electronic apparatus 100. The first audio apparatus 201, the second audio apparatus 202, and the third audio apparatus 203 may be positioned toward the center of the space.

The electronic apparatus 100 may acquire various types of information related to the first audio apparatus 201, the second audio apparatus 202, and the third audio apparatus 203. The electronic apparatus 100 may acquire the first channel configuration information, the first arrangement position, and the first arrangement angle of the first audio apparatus 201. The electronic apparatus 100 may acquire the second channel configuration information, the second arrangement position, and the second arrangement angle of the second audio apparatus 202. The electronic apparatus 100 may acquire the third channel configuration information, the third arrangement position, and the third arrangement angle of the third audio apparatus 203.

Referring to Table 2010, the electronic apparatus 100 may acquire the first audio data to be output from the first audio apparatus 201, the second audio data to be output from the second audio apparatus 202, and the third audio data to be output from the third audio apparatus 203 based on the audio content, the first channel configuration information, the first arrangement position, the first arrangement angle, the second channel configuration information, the second arrangement position, the second arrangement angle, the third channel configuration information, the third arrangement position, and the third arrangement angle. The electronic apparatus 100 may transmit the first audio data to the first audio apparatus 201. The electronic apparatus 100 may transmit the second audio data to the second audio apparatus 202. The electronic apparatus 100 may transmit the third audio data to the third audio apparatus 203.

According to an embodiment, the electronic apparatus 100 may acquire the first audio data by assigning the left channel L to the first speaker 11, the center channel C to the second speaker 12, the right channel R to the third speaker 13, the top-front channel Top-Front to the sixth speaker 16, and the top-front channel Top-Front to the seventh speaker 17, and not assigning any channel to the fourth speaker 14 and the fifth speaker 15.

According to an embodiment, the electronic apparatus 100 may acquire the second audio data by assigning the side-left channel Side-L to the first speaker 11, the side-left channel Side-L to the second speaker 12, the side-left channel Side-L to the third speaker 13, the rear-left channel Rear-L to the fourth speaker 14, the top-rear channel Top-Rear to the sixth speaker 16, the top-rear channel Top-Rear to the seventh speaker 17, and not assigning any channel to the fifth speaker 15.

According to an embodiment, the electronic apparatus 100 may acquire the third audio data by assigning the side-right channel Side-R to the first speaker 11, the side-right channel Side-R to the second speaker 12, the side-right channel Side-R to the third speaker 13, the rear-right channel Rear-R to the fifth speaker 15, the top-rear channel Top-Rear to the sixth speaker 16, and the top-rear channel Top-Rear to the seventh speaker 17, and not assigning any channel to the fourth speaker 14.

FIG. 21 is a diagram for describing an operation of outputting audio data through three audio apparatuses according to an embodiment.

Referring to an embodiment 2100 of FIG. 21, the electronic apparatus 100 may be connected to the first audio apparatus 201, the second audio apparatus 202, and the third audio apparatus 203. The electronic apparatus 100 may output the audio signal through the first audio apparatus 201, the second audio apparatus 202, and the third audio apparatus 203. The first audio apparatus 201, the second audio apparatus 202, and the third audio apparatus 203 may correspond to the audio apparatus of the 7-channel embodiment 440 of FIG. 4. The first audio apparatus 201 may be arranged at a specific angle (e.g., roll(0), pitch(0), yaw(0)) below the electronic apparatus 100. The second audio apparatus 202 may be positioned at a specific angle (e.g., roll(0), pitch(0), yaw(90)) on the left side surface of the wall surface where the electronic apparatus 100 is positioned based on the direction facing the electronic apparatus 100. The third audio apparatus 203 may be positioned at a specific angle (e.g., roll(-90), pitch(0), yaw(-90)) on a right side surface of the wall surface where the electronic apparatus 100 is positioned based on the direction facing the electronic apparatus 100. The first audio apparatus 201, the second audio apparatus 202, and the third audio apparatus 203 may be positioned toward the center of the space.

The electronic apparatus 100 may acquire various types of information related to the first audio apparatus 201, the second audio apparatus 202, and the third audio apparatus 203. The electronic apparatus 100 may acquire the first channel configuration information, the first arrangement position, and the first arrangement angle of the first audio apparatus 201. The electronic apparatus 100 may acquire the second channel configuration information, the second arrangement position, and the second arrangement angle of the second audio apparatus 202. The electronic apparatus 100 may acquire the third channel configuration information, the third arrangement position, and the third arrangement angle of the third audio apparatus 203.

Referring to Table 2110, the electronic apparatus 100 may acquire the first audio data to be output from the first audio apparatus 201, the second audio data to be output from the second audio apparatus 202, and the third audio data to be output from the third audio apparatus 203 based on the audio content, the first channel configuration information, the first arrangement position, the first arrangement angle, the second channel configuration information, the second arrangement position, the second arrangement angle, the third channel configuration information, the third arrangement position, and the third arrangement angle. The electronic apparatus 100 may transmit the first audio data to the first audio apparatus 201. The electronic apparatus 100 may transmit the second audio data to the second audio apparatus 202. The electronic apparatus 100 may transmit the third audio data to the third audio apparatus 203.

According to an embodiment, the electronic apparatus 100 may acquire the first audio data by assigning the center channel C to the first speaker 11, the center channel C to the second speaker 12, the center channel C to the third speaker 13, the top-front channel Top-Front to the sixth speaker 16, and the top-front channel Top-Front to the seventh speaker 17, and not assigning any channel to the fourth speaker 14 and the fifth speaker 15.

According to an embodiment, the electronic apparatus 100 may acquire the second audio data by assigning the left channel L to the first speaker 11, the left channel L to the second speaker 12, the left channel L to the third speaker 13, the top-left channel Top-L to the fifth speaker 15, the rear-left channel Rear-L to the sixth speaker 16, the rear-left channel Rear-L to the seventh speaker 17, and not assigning any channel to the fourth speaker 14.

According to an embodiment, the electronic apparatus 100 may acquire the third audio data by assigning the right channel R to the first speaker 11, the right channel R to the second speaker 12, the right channel R to the third speaker 13, the top-right channel Top-R to the fourth speaker 14, the rear-right channel Rear-R to the sixth speaker 16, the rear-right channel Rear-R to the seventh speaker 17, and not assigning any channel to the fifth speaker 15.

Referring to FIGS. 22 to 24, the electronic apparatus 100 may be connected to the first audio apparatus 201, the second audio apparatus 202, the third audio apparatus 203, and the fourth audio apparatus 204. The electronic apparatus 100 may output the audio signal through the first audio apparatus 201, the second audio apparatus 202, the third audio apparatus 203, and the fourth audio apparatus 204. The first audio apparatus 201, the second audio apparatus 202, the third audio apparatus 203, and the fourth audio apparatus 204 may correspond to the 7-channel audio apparatus of an embodiment 440 of FIG. 4.

The electronic apparatus 100 may acquire various types of information related to the first audio apparatus 201, the second audio apparatus 202, the third audio apparatus 203, and the fourth audio apparatus 204. The electronic apparatus 100 may acquire the first channel configuration information, the first arrangement position, and the first arrangement angle of the first audio apparatus 201. The electronic apparatus 100 may acquire the second channel configuration information, the second arrangement position, and the second arrangement angle of the second audio apparatus 202. The electronic apparatus 100 may acquire the third channel configuration information, the third arrangement position, and the third arrangement angle of the third audio apparatus 203. The electronic apparatus 100 may acquire the fourth audio content, the fourth arrangement position, and the fourth arrangement angle of the fourth audio apparatus 204.

The electronic apparatus 100 may acquire the first audio data to be output from the first audio apparatus 201, the second audio data to be output from the second audio apparatus 202, the third audio data to be output from the third audio apparatus 203, and the fourth audio data to be output from the fourth audio apparatus 204 based on the audio content, the first channel configuration information, the first arrangement position, the first arrangement angle, the second channel configuration information, the second arrangement position, the second arrangement angle, the third channel configuration information, the third arrangement position, the third arrangement angle, the fourth the channel configuration information, the fourth arrangement position, and the fourth arrangement angle. The electronic apparatus 100 may transmit the first audio data to the first audio apparatus 201. The electronic apparatus 100 may transmit the second audio data to the second audio apparatus 202. The electronic apparatus 100 may transmit the third audio data to the third audio apparatus 203. The electronic apparatus 100 may transmit the fourth audio data to the fourth audio apparatus 204.

FIG. 22 is a diagram for describing an operation of outputting audio data through four audio apparatuses according to an embodiment.

Referring to an embodiment 2200 of FIG. 22, the first audio apparatus 201 may be arranged at a specific angle (e.g., roll(0), pitch(0), yaw(0)) below the electronic apparatus 100. The second audio apparatus 202 may be positioned at a specific angle (e.g., roll(0), pitch(0), yaw(90)) on a left side surface of the wall surface where the electronic apparatus 100 is positioned based on the direction facing the electronic apparatus 100. The third audio apparatus 203 may be positioned at a specific angle (e.g., roll(0), pitch(0), yaw(-90)) on a right side surface of the wall surface where the electronic apparatus 100 is positioned based on the direction facing the electronic apparatus 100. The fourth audio apparatus 204 may be positioned at a specific angle (e.g., roll(0), pitch(0), yaw 180) on the opposite surface of the wall surface where the electronic apparatus 100 is positioned. The first audio apparatus 201, the second audio apparatus 202, the third audio apparatus 203, and the fourth audio apparatus 204 may be positioned toward the center of the space.

Referring to Table 2210, according to an embodiment, the electronic apparatus 100 may acquire the first audio data by assigning the center channel C to the first speaker 11, the center channel C to the second speaker 12, the center channel C to the third speaker 13, the top-front channel Top-Front to the sixth speaker 16, and the top-front channel Top-Front to the seventh speaker 17, and not assigning any channel to the fourth speaker 14 and the fifth speaker 15.

According to an embodiment, the electronic apparatus 100 may acquire the second audio data by assigning the left channel L to the first speaker 11, the left channel L to the second speaker 12, the left channel L to the third speaker 13, the top left channel Top-L to the sixth speaker 16, the top left channel Top-L to the seventh speaker 17, and not assigning any channel to the fourth speaker 14 and the fifth speaker 15.

According to an embodiment, the electronic apparatus 100 may acquire the third audio data by assigning the right channel R to the first speaker 11, the right channel R to the second speaker 12, the right channel R to the third speaker 13, the top right channel Top-R to the sixth speaker 16, the top right channel Top-R to the seventh speaker 17, and not assigning any channel to the fourth speaker 14 and the fifth speaker 15.

According to an embodiment, the electronic apparatus 100 may acquire the fourth audio data by assigning the rear channel Rear to the first speaker 11, the rear channel Rear to the second speaker 12, the rear channel Rear to the third speaker 13, the top-rear channel Top-Rear to the sixth speaker 16, and the top-rear channel Top-Rear to the seventh speaker 17, and not assigning any channel to the fourth speaker 14 and the fifth speaker 15.

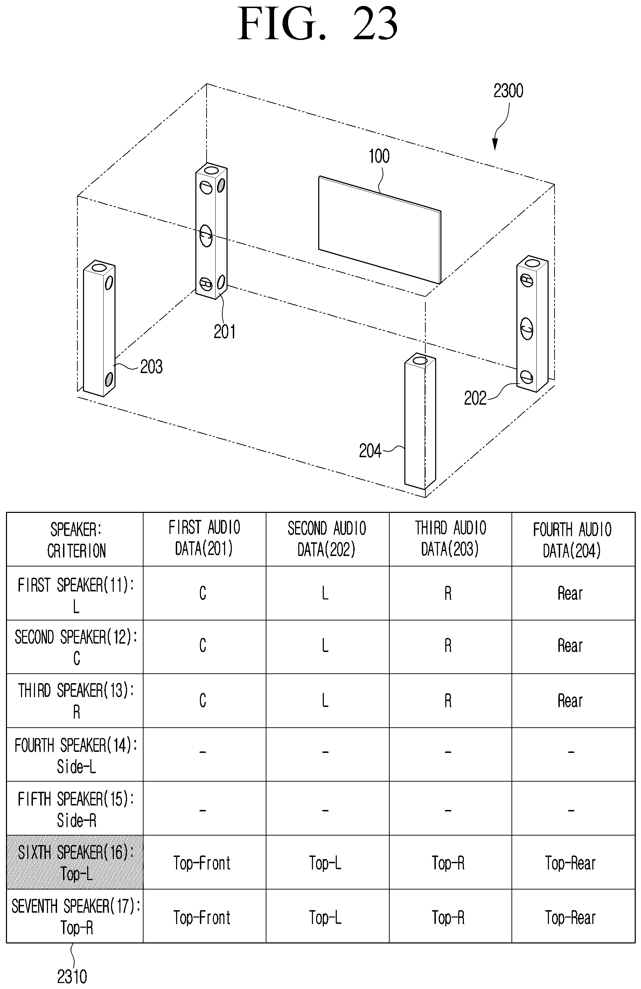

FIG. 23 is a diagram for describing an operation of outputting audio data through four audio apparatuses according to an embodiment.

Referring to an embodiment 2300 of FIG. 23, the first audio apparatus 201 may be arranged at a specific angle (e.g., roll (-90), pitch (0), yaw (0)) on the left front surface of the electronic apparatus 100 based on the direction facing the electronic apparatus 100. The second audio apparatus 202 may be positioned at a specific angle (e.g., roll(90), pitch(0), yaw(0)) on the right front surface of the electronic apparatus 100 based on the direction facing the electronic apparatus 100. The third audio apparatus 203 may be positioned at a specific angle (e.g., roll(90), pitch(0), yaw(180)) on the left rear surface of the electronic apparatus 100 based on the direction facing the electronic apparatus 100. The fourth audio apparatus 204 may be positioned at a specific angle (e.g., roll(90), pitch(0), yaw(180)) on the right rear surface of the electronic apparatus 100 based on the direction facing the electronic apparatus 100. The first audio apparatus 201, the second audio apparatus 202, the third audio apparatus 203, and the fourth audio apparatus 204 may be positioned toward the center of the space.

Referring to Table 2310, according to an embodiment, the electronic apparatus 100 may acquire the first audio data by assigning the left channel L to the first speaker 11, the left channel L to the second speaker 12, the left channel L to the third speaker 13, a top-front-left channel Top-Front-L to the fourth speaker 14, the left channel L to the sixth speaker 16, the left channel L to the seventh speaker 17, and not assigning any channel to the fifth speaker 15.

According to an embodiment, the electronic apparatus 100 may acquire the second audio data by assigning the right channel R to the first speaker 11, the right channel R to the second speaker 12, the right channel R to the third speaker 13, a top-front-right channel Top-Front-R to the fifth speaker 15, the right channel R to the sixth speaker 16, and the right channel R to the seventh speaker 17, and not assigning any channel to the fourth speaker 14.

According to an embodiment, the electronic apparatus 100 may acquire the third audio data by assigning the rear-left channel Rear-L to the first speaker 11, the rear-left channel Rear-L to the second speaker 12, the rear-left channel Rear-L to the third speaker 13, a top-rear-left channel Top-Rear-L to the fourth speaker 14, the rear-left channel Rear-L to the sixth speaker 16, the rear-left channel Rear-L to the seventh speaker 17, and not assigning any channel to the fifth speaker 15.

According to an embodiment, the electronic apparatus 100 may acquire the fourth audio data by assigning the rear-right channel Rear-R to the first speaker 11, the rear-right channel Rear-R to the second speaker 12, the rear-right channel Rear-R to the third speaker 13, the top-rear-right channel Top-Rear-R to the fifth speaker 15, the rear-right channel Rear-R to the sixth speaker 16, the rear-right channel Rear-R to the seventh speaker 17, and not assigning any channel to the fourth speaker 14.

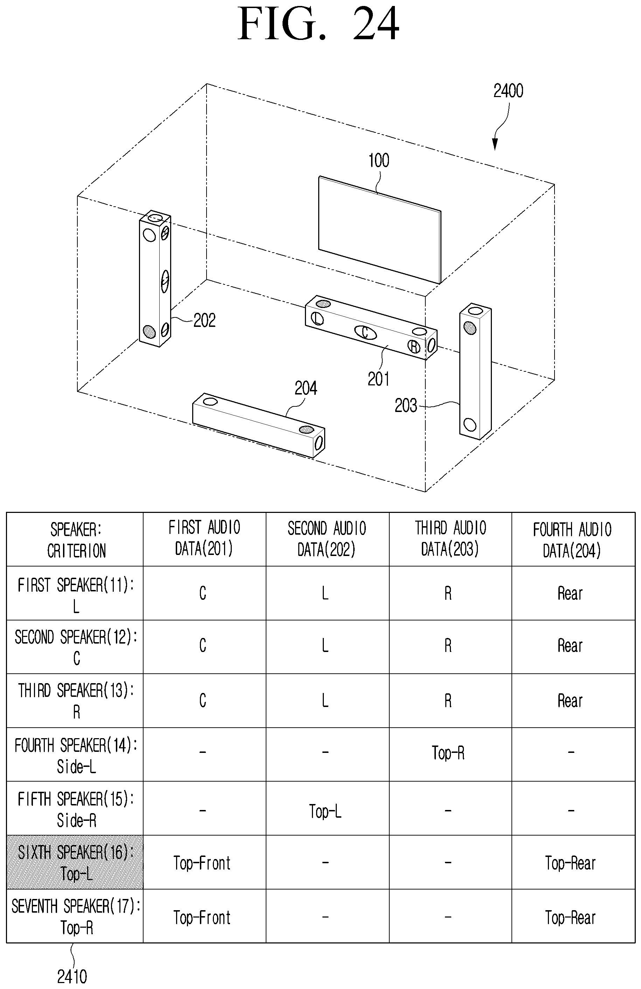

FIG. 24 is a diagram for describing an operation of outputting audio data through four audio apparatuses according to an embodiment.

Referring to an embodiment 2400 of FIG. 24, the first audio apparatus 201 may be arranged at a specific angle (e.g., roll(0), pitch(0), yaw(0)) below the electronic apparatus 100. The second audio apparatus 202 may be positioned at a specific angle (e.g., roll(90), pitch(0), yaw(90)) on the left side surface of the wall surface where the electronic apparatus 100 is positioned based on the direction facing the electronic apparatus 100. The third audio apparatus 203 may be positioned at a specific angle (e.g., roll(-90), pitch(0), yaw(-90)) on the right side surface of the wall surface where the electronic apparatus 100 is positioned based on the direction facing the electronic apparatus 100. The fourth audio apparatus 204 may be positioned at a specific angle (e.g., roll(0), pitch(0), yaw 180) on the opposite surface of the wall surface where the electronic apparatus 100 is positioned. The first audio apparatus 201, the second audio apparatus 202, the third audio apparatus 203, and the fourth audio apparatus 204 may be positioned toward the center of the space.

Referring to Table 2410, according to an embodiment, the electronic apparatus 100 may acquire the first audio data by assigning the center channel C to the first speaker 11, the center channel C to the second speaker 12, the center channel C to the third speaker 13, the top-front channel Top-Front to the sixth speaker 16, and the top-front channel Top-Front to the seventh speaker 17, and not assigning any channel to the fourth speaker 14 and the fifth speaker 15.

According to an embodiment, the electronic apparatus 100 may acquire the second audio data by assigning the left channel L to the first speaker 11, the left channel L to the second speaker 12, the left channel L to the third speaker 13, the top left channel Top-L to the fifth speaker 15, and not assigning any channel to the fourth speaker 14, the sixth speaker 16, and the seventh speaker 17.

According to an embodiment, the electronic apparatus 100 may acquire the third audio data by assigning the right channel R to the first speaker 11, the right channel R to the second speaker 12, the right channel R to the third speaker 13, the top right channel Top-R to the fourth speaker 14, and not assigning any channel to the fifth speaker 15, the sixth speaker 16, and the seventh speaker 17.

According to an embodiment, the electronic apparatus 100 may acquire the fourth audio data by assigning the rear channel Rear to the first speaker 11, the rear channel Rear to the second speaker 12, the rear channel Rear to the third speaker 13, the top-rear channel Top-Rear to the sixth speaker 16, and the top-rear channel Top-Rear to the seventh speaker 17, and not assigning any channel to the fourth speaker 14 and the fifth speaker 15.

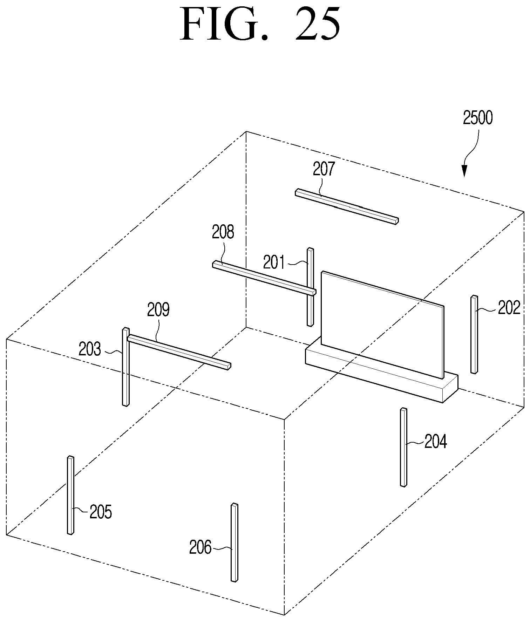

FIG. 25 is a diagram for describing an operation of outputting audio data through nine audio apparatuses according to an embodiment.

Referring to an embodiment 2500 of FIG. 25, the electronic apparatus 100 may be connected to a plurality of audio apparatuses 201, 202, 203, 204, 205, 206, 207, 208, and 209. Some of the audio apparatuses 207, 208, and 209 may be arranged on a ceiling surface. The electronic apparatus 100 may acquire the channel configuration information, the arrangement position, and the arrangement angle of each of the plurality of audio apparatuses 201, 202, 203, 204, 205, 206, 207, 208, and 209. The electronic apparatus 100 may acquire the audio data including the audio signals for each of the plurality of audio apparatuses 201, 202, 203, 204, 205, 206, 207, 208, and 209 based on the audio content, the channel configuration information, arrangement position, and the arrangement angle. The number of audio data may be equal to the number of the plurality of audio apparatuses 201, 202, 203, 204, 205, 206, 207, 208, and 209.

FIG. 26 is a diagram for describing an operation of outputting audio data through nine audio apparatuses according to an embodiment.

Referring to an embodiment 2600 of FIG. 26, the electronic apparatus 100 may be connected to the plurality of audio apparatuses 201, 202, 203, 204, 205, 206, 207, 208, and 209. Some of the audio apparatuses 208 and 209 may be arranged on the ceiling surface. The electronic apparatus 100 may acquire the channel configuration information, the arrangement position, and the arrangement angle of each of the plurality of audio apparatuses 201, 202, 203, 204, 205, 206, 207, 208, and 209. The electronic apparatus 100 may acquire the audio data including the audio signals for each of the plurality of audio apparatuses 201, 202, 203, 204, 205, 206, 207, 208, and 209 based on the audio content, the channel configuration information, arrangement position, and the arrangement angle. The number of audio data may be equal to the number of the plurality of audio apparatuses 201, 202, 203, 204, 205, 206, 207, 208, and 20**9**.

FIG. 27 is a diagram for describing an audio apparatus including a plurality of sub-speakers according to an embodiment.

Referring to FIG. 27, the electronic apparatus 100 may include the plurality of speakers 11, 12, 13, 14, 15, 16, and 17. The electronic apparatus 100 of FIG. 27 may correspond to the embodiment 440 of FIG. 4.

Some of the plurality of speakers 11, 12, and 13 may include sub-speakers.

The first speaker 11 may include two sub-speakers 11-1 and 11-2. Each of the sub-speakers 11-1 and 11-2 may be controlled to output audio signals of different frequency bands, respectively.

The second speaker 12 may include three sub-speakers 12-1, 12-2, and 12-3. Each of the sub-speakers 12-1, 12-2, and 12-3 may be controlled to output audio signals of different frequency bands, respectively.

The third speaker 13 may include two sub-speakers 13-1 and 13-2. Each of the sub-speakers 13-1 and 13-2 may be controlled to output audio signals of different frequency bands, respectively.

The electronic apparatus 100 may assign areas such as A, B, C, D, E, F, and G. The electronic apparatus 100 may assign area A to the first speaker 11, area B to the second speaker 12, area C to the third speaker 13, area D to the fourth speaker 14, area E to the fifth speaker 15, area F to the sixth speaker 16, and area G to the seventh speaker 17. Each area may be an area for assigning a channel.

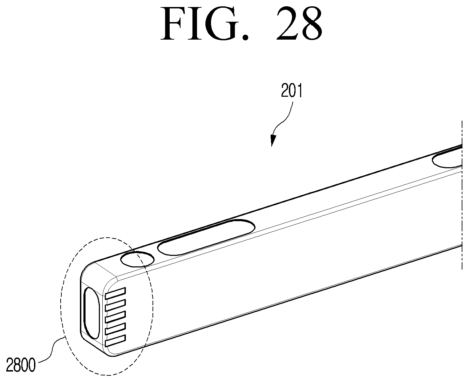

FIG. 28 is a diagram for describing a contact terminal according to an embodiment.

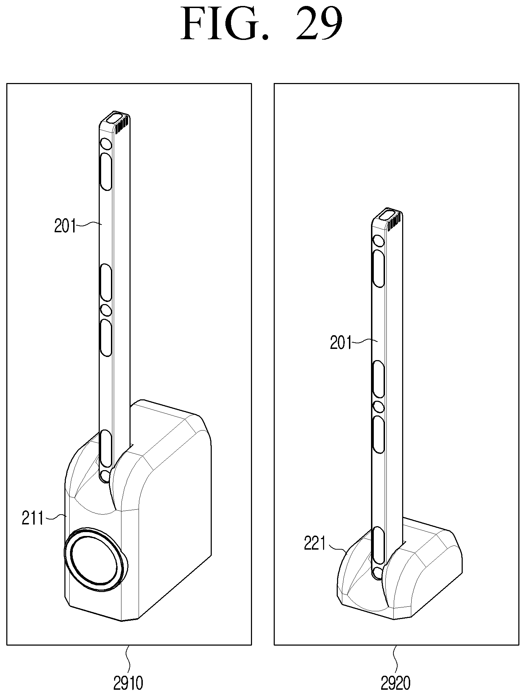

Referring to FIG. 28, the first audio apparatus 201 may have a contact terminal arranged in an area where the fourth speaker 14 or the fifth speaker 15 is arranged. The contact terminal may be a terminal that comes into contact with a stand described in FIGS. 29 to 31. The contact terminal may sense a coupling direction of the first audio apparatus 201. The first audio apparatus 201 may sense a coupling direction with the stand through the contact terminal. The first audio apparatus 201 may determine whether the first audio apparatus 201 is normally coupled through the contact terminal.

FIG. 29 is a diagram for describing the stand for holding the audio apparatus according to an embodiment.

Referring to an embodiment 2910 of FIG. 29, the first audio apparatus 201 may be coupled to the first sub audio apparatus 211. The first sub audio apparatus 211 may include a woofer speaker. The first sub audio apparatus 211 may be an audio apparatus that performs a woofer output function through the supply of power. The contact terminal of the first sub audio apparatus 211 and the contact terminal of the first audio apparatus 201 may be coupled to each other.

Referring to an embodiment 2920 of FIG. 29, the first audio apparatus 201 may be coupled to the stand 221. The contact terminal of the stand 221 and the contact terminal of the first audio apparatus 201 may be coupled to each other.

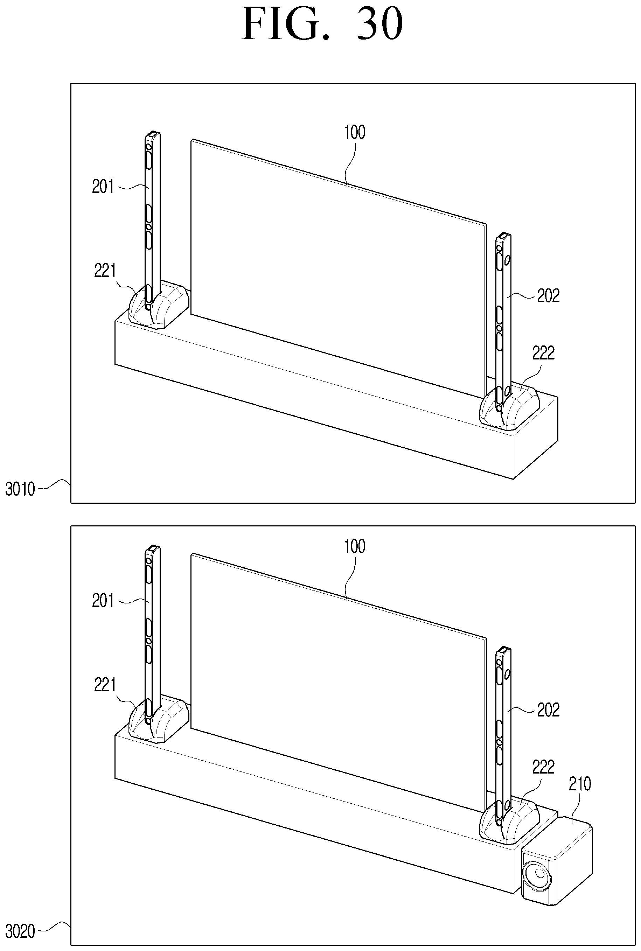

FIG. 30 is a diagram for describing the plurality of audio apparatuses erected on the stand according to an embodiment.

Referring to an embodiment 3010 of FIG. 30, the first audio apparatus 201 may be coupled to the stand 221. The contact terminal of the stand 221 and the contact terminal of the first audio apparatus 201 may be coupled to each other. The second audio apparatus 202 may be coupled to the stand 222. The contact terminal of the stand 222 and the contact terminal of the second audio apparatus 202 may be coupled to each other. The electronic apparatus 100 may be connected to the first audio apparatus 201 attached to the stand 221 and the second audio apparatus 202 attached to the stand 222. The electronic apparatus 100 may output the audio data through the first audio apparatus 201 and the second audio apparatus 202.

Referring to an embodiment 3020 of FIG. 30, in the embodiment 3010, the sub audio apparatus 210 may be additionally connected to the electronic apparatus 100. The electronic apparatus 100 may output the audio data through the first audio apparatus 201, the second audio apparatus 202, and the sub audio apparatus 210.

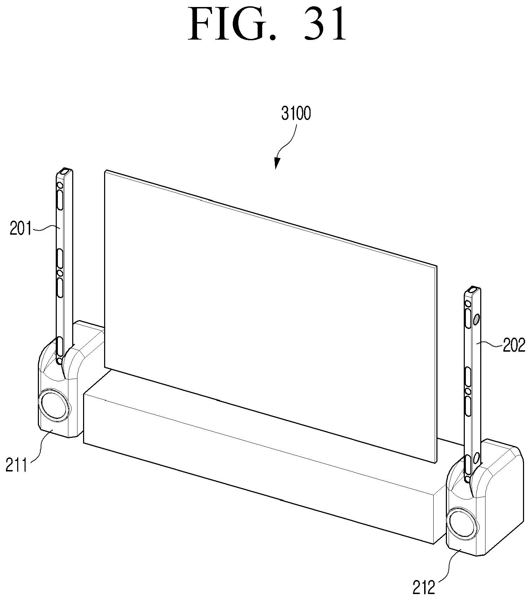

FIG. 31 is a diagram for describing the plurality of audio apparatuses erected on the stand according to an embodiment.

Referring to an embodiment 3100 of FIG. 31, the first audio apparatus 201 may be coupled to the first sub audio apparatus 211. The first sub audio apparatus 211 may include a woofer speaker. The second audio apparatus 202 may be coupled to the second sub audio apparatus 212. The second sub audio apparatus 212 may include a woofer speaker.

The electronic apparatus 100 may output the audio data through the first audio apparatus 201, the first sub audio apparatus 211, the second audio apparatus 202, and the second sub audio apparatus 212.

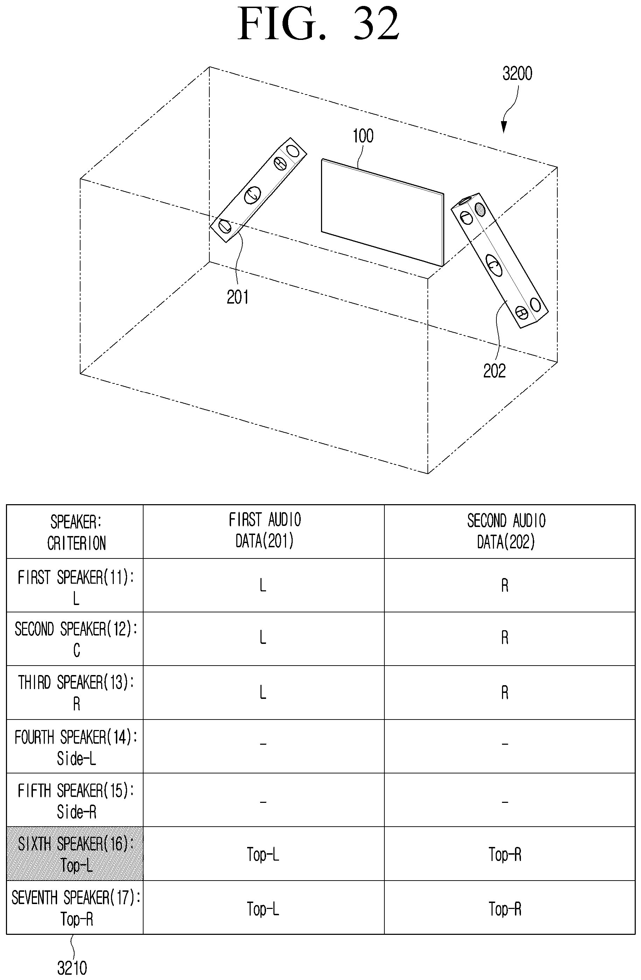

FIG. 32 is a diagram for describing an audio apparatus in a state of being elongated to a specific angle range according to an embodiment.

FIGS. 13 to 24 illustrate that the plurality of audio apparatuses are arranged in a state in which they rotate in units of 90°. The audio apparatus may be arranged in a state in which they rotate at various angles other than 90°.

Referring to FIG. 32, the first audio apparatus 201 may be arranged at a specific angle (e.g., roll(45), pitch(0), yaw(0)) to the left of the electronic apparatus 100 based on the direction in which the electronic apparatus 100 is viewed. The second audio apparatus 202 may be positioned at a specific angle (e.g., roll(-45), pitch(0), yaw(0)) to the right of the electronic apparatus 100 based on the direction facing the electronic apparatus 100.

Referring to Table 3210, according to an embodiment, the electronic apparatus 100 may generate the first audio data by assigning the left channel L to the first speaker 11, the left channel L to the second speaker 12, the left channel L to the third speaker 13, the top left channel Top-L to the sixth speaker 16, the top left channel Top-L to the seventh speaker 17, and not assigning any channel to the fourth speaker 14 and the fifth speaker 15.

According to an embodiment, the electronic apparatus 100 may generate the second audio data by assigning the right channel R to the first speaker 11, the right channel R to the second speaker 12, the right channel R to the third speaker 13, the upper right channel Top-R to the sixth speaker 16, the upper right channel Top-R to the seventh speaker 17, and not assigning any channel to the fourth speaker 14 and the fifth speaker 15.

The electronic apparatus 100 may output the first audio data through the first audio apparatus 201, and output the second audio data through the second audio apparatus 202.

According to another embodiment, the assignment of the upper left channel Top-L and the upper right channel Top-R in the description of FIG. 32 may be excluded.

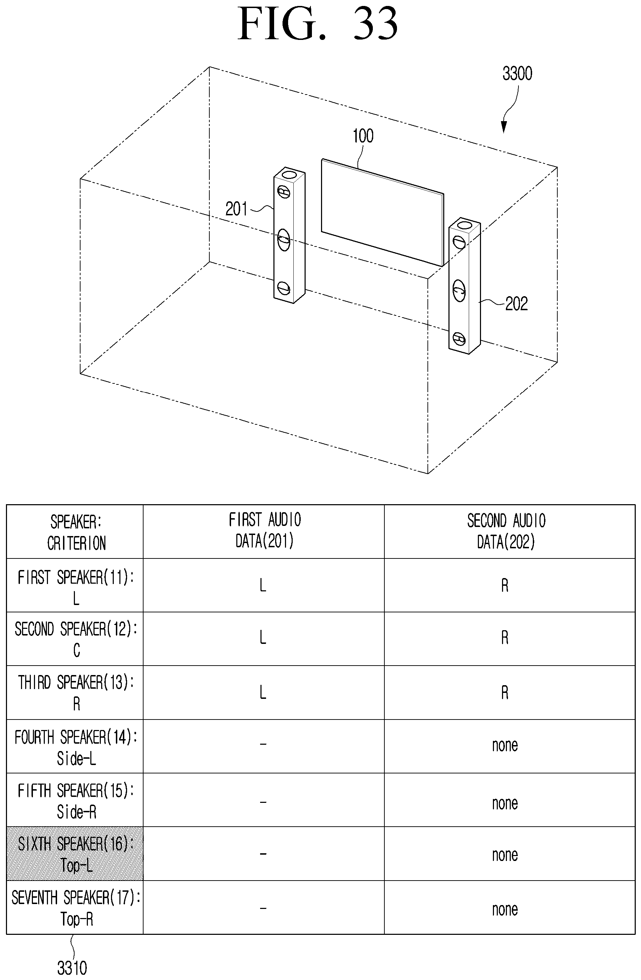

FIG. 33 is a diagram for describing a situation in which different types of audio apparatuses exist according to an embodiment.

Referring to an embodiment 3300 of FIG. 33, the electronic apparatus 100 may be connected to the first audio apparatus 201 and the second audio apparatus 202. The first audio apparatus 201 may correspond to the embodiment 440 of FIG. 4, and the second audio apparatus 202 may correspond to the embodiment 420 of FIG. 4. The supportable channels of each audio apparatus may be different.

The first audio apparatus 201 may be positioned at a specific angle (e.g., roll(90), pitch(0), yaw(0)) to the left of the electronic apparatus 100 based on the direction facing the electronic apparatus 100, and the second audio apparatus 202 may be positioned at a specific angle (e.g., roll(-90), pitch(0), yaw(0)) to the right of the electronic apparatus 100.

The first channel configuration information of the first audio apparatus 201 and the second channel configuration information of the second audio apparatus 202 may be different.

Referring to Table 3310, according to an embodiment, the electronic apparatus 100 may acquire the first audio data by assigning the left channel L to the first speaker 11, the left channel L to the second speaker 12, the left channel L to the third speaker 13, and not assigning any channel to the fourth speaker 14, the fifth speaker 15, the sixth speaker 16, and the seventh speaker 17.

According to an embodiment, the electronic apparatus 100 may acquire the second audio data by assigning the right channel R to the first speaker 11, the right channel R to the second speaker 12, and the right channel R to the third speaker 13. The second audio apparatus 202 may not include the fourth speaker 14, the fifth speaker 15, the sixth speaker 16, the seventh speaker 17, etc.

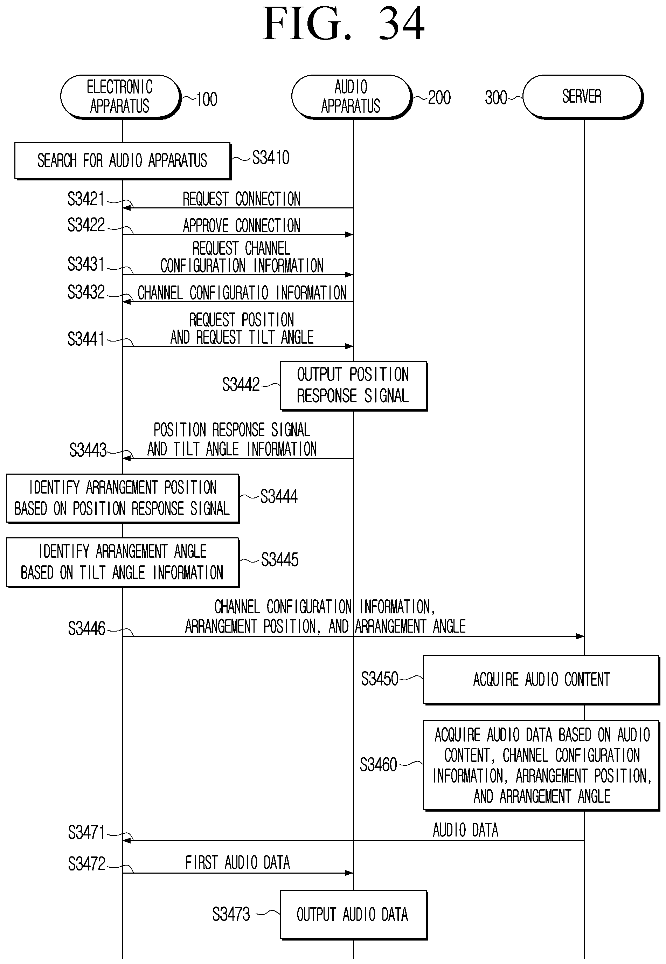

FIG. 34 is a sequence diagram for describing an operation of acquiring audio data using a server 300 according to an embodiment.

Steps S3410, S3421, S3422, S3431, S3432, S3441, S3442, S3443, S3444, and S3445 of FIG. 34 may correspond to steps S610, S621, S622, S631, S632, S641, S642, S643, S644, and S645 of FIG. 6. Redundant descriptions will be omitted.

After identifying the arrangement position and the arrangement angle, the electronic apparatus 100 may transmit at least one of the channel configuration information, the arrangement position, or the arrangement angle to the server 300 (S3446).

The server 300 may receive at least one of the channel configuration information, the arrangement position, or the arrangement angle from the electronic apparatus 100.

The server 300 may acquire the audio content (S3450). The server 300 may acquire the audio data based on at least one of the audio content, the channel configuration information, the arrangement position, or the arrangement angle (S3460). The server 300 may transmit the audio data to the electronic apparatus 100 (S3471).

The electronic apparatus 100 may receive the audio data from the server 300. The electronic apparatus 100 may transmit the audio data to the audio apparatus 200 (S3472).

The audio apparatus 200 may receive the audio data from the electronic apparatus 100. The audio apparatus 200 may output the audio data (S3473).

According to an embodiment, the server 300 may store an artificial intelligence model for acquiring (or generating) the audio data. The artificial intelligence model may receive the audio content, the channel configuration information, the arrangement position, and the arrangement angle as input data. The artificial intelligence model may acquire (or output) the audio data as output data. The audio data may include a multi-channel audio signal optimized for an environment in which the audio apparatus 200 is arranged. The artificial intelligence model may generate the audio data including the audio signals to be provided to each of the plurality of speakers included in the audio apparatus 200.

The server 300 may train the artificial intelligence model. The server 300 may train the artificial intelligence model using various training data. The learning method may be various.

According to an embodiment, the artificial intelligence model may be trained using predefined training data. The predefined training data may include audio data set by an expert in consideration of an optimal sound environment in a given arrangement environment. The audio data for each of the plurality of arrangement environments may exist. The artificial intelligence model may be trained using the audio data generated in advance by an expert.

According to an embodiment, the artificial intelligence model may be trained using feedback information of the provided audio data. The server 300 may be requested to generate the audio data from various devices. After the server 300 provides the audio data to various devices, it may receive the feedback information on the audio data provided from various devices. The server 300 may identify whether the user is satisfied with the provided audio data based on the feedback information. When the user identifies that the provided audio data is satisfactory, the server 300 may use the provided audio data and the arrangement environment as the training data.

The server 300 may generate the audio data requested by the electronic apparatus 100 using the pre-trained artificial intelligence model.

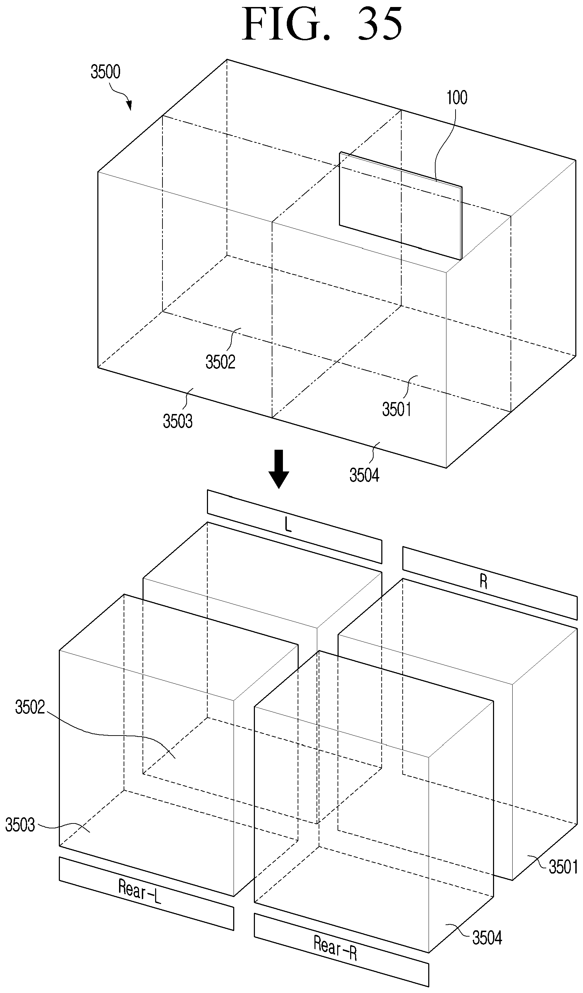

FIG. 35 is a diagram for describing an operation of allocating channel-specific audio signals by dividing a space according to an embodiment.

Referring to an embodiment 3500 of FIG. 35, the electronic apparatus 100 may analyze the space in which the electronic apparatus 100 is arranged. The electronic apparatus 100 may acquire the sensing data to analyze the space in which the electronic apparatus 100 is arranged. The electronic apparatus 100 may include a sensor unit. The electronic apparatus 100 may acquire spatial data through the sensor unit.

The sensor unit may include at least one of a 3D depth camera, a time of flight (ToF) sensor, and an image sensor. The electronic apparatus 100 may generate a spatial map in which the electronic apparatus 100 is arranged based on the sensing data. The electronic apparatus 100 may specify the position of the electronic apparatus 100 and the position of the audio apparatus 200 in the spatial map. The spatial map may be a two-dimensional map or a three-dimensional map.

The electronic apparatus 100 may divide the spatial map into the preset number of partitions. The preset number may be determined based on the total size of the spatial map or the number of audio apparatuses 200 connected to the electronic apparatus 100. When the size of the spatial map is large, the preset number may be large. When the number of audio apparatuses 200 connected to the electronic apparatus 100 is large, the preset number may be large.

The electronic apparatus 100 may divide the entire space of the spatial map into the preset number. The division criteria may be front, back, left, right, etc. In the embodiment of FIG. 35, it is assumed that the preset number is 4. The electronic apparatus 100 may divide the entire space into the plurality of spaces 3501, 3502, 3503, and 3504 based on the spatial map. Each space may be a first space 3501, a second space 3502, a third space 3503, a fourth space 3504, etc. based on the direction facing the electronic apparatus 100.

The electronic apparatus 100 may apply a channel allocation method corresponding to each space.

For example, the electronic apparatus 100 may determine based on the arrangement position and the spatial map of the audio apparatus 200 whether the audio apparatus 200 exists in the first space 3501 corresponding to the right front based on the direction facing the electronic apparatus 100. When the audio apparatus 200 is arranged in the first space 3501, the electronic apparatus 100 may acquire the audio data by assigning the right channel R to the audio apparatus 200.

For example, the electronic apparatus 100 may determine whether the audio apparatus 200 exists in the second space 3502 corresponding to the left front side from the direction facing the electronic apparatus 100 based on the arrangement position and the spatial map of the audio apparatus 200. When the audio apparatus 200 is arranged in the second space 3502, the electronic apparatus 100 may acquire the audio data by assigning the left channel L to the audio apparatus 200.

For example, the electronic apparatus 100 may determine whether the audio apparatus 200 exists in the third space 3503 corresponding to the left rear surface from the direction facing the electronic apparatus 100 based on the arrangement position and the spatial map of the audio apparatus 200. When the audio apparatus 200 is arranged in the third space 3503, the electronic apparatus 100 may acquire the audio data by assigning the rear-left channel Rear-L to the audio apparatus 200.

For example, the electronic apparatus 100 may determine based on the arrangement position and the spatial map of the audio apparatus 200 whether the audio apparatus 200 exists in the fourth space 3504 corresponding to the right rear side based on the direction facing the electronic apparatus 100. When the audio apparatus 200 is arranged in the fourth space 3504, the electronic apparatus 100 may acquire the audio data by assigning the rear-right channel Rear-R to the audio apparatus 200.

According to another embodiment, the electronic apparatus 100 may acquire the audio data by considering the direction facing the plurality of speakers included in the audio apparatus 200.

When the audio apparatus 200 is arranged in the first space 3501, the electronic apparatus 100 may acquire the audio data by selectively assigning the right channel R only to the speaker facing the x, y plane (see FIG. 12) among the plurality of speakers included in the audio apparatus 200.

When the audio apparatus 200 is arranged in the second space 3502, the electronic apparatus 100 may acquire the audio data by selectively assigning the left channel L only to the speaker facing the x, y plane (see FIG. 12) among the plurality of speakers included in the audio apparatus 200.

When the audio apparatus 200 is arranged in the third space 3503, the electronic apparatus 100 may acquire the audio data by selectively assigning the rear left channel Rear-L only to the speaker facing the x, y plane (see FIG. 12) among the plurality of speakers included in the audio apparatus 200.

When the audio apparatus 200 is arranged in the fourth space 3504, the electronic apparatus 100 may acquire the audio data by selectively assigning the rear-right channel Rear-R only to the speakers facing the x, y plane (see FIG. 12) among the plurality of speakers included in the audio apparatus 200.

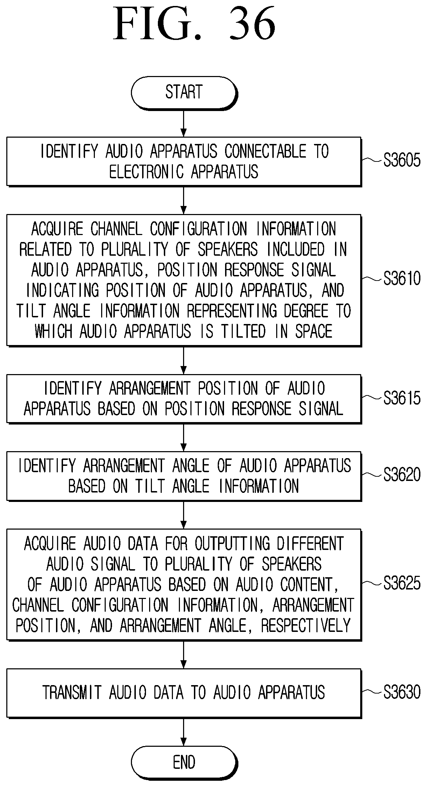

FIG. 36 is a flowchart for describing a controlling method of an electronic apparatus 100 according to an embodiment.

Referring to FIG. 36, a controlling method of an electronic apparatus for storing audio content includes a step (S3605) of identifying an audio apparatus connectable to an electronic apparatus, a step (S3610) of acquiring, from the audio apparatus, channel configuration information related to a plurality of speakers included in the audio apparatus, position response signal representing a position of the audio apparatus, and tilt angle information representing a degree to which the audio apparatus is tilted in a space from the audio apparatus, a step (S3615) of identifying an arrangement position of the audio apparatus based on the position response signal, a step (S3620) of identifying an arrangement angle of the audio apparatus based on the tilt angle information, a step (S3625) of acquiring audio data for outputting different audio signals to each of the plurality of speakers of the audio apparatus based on the audio content, the channel configuration information, the arrangement position, and the arrangement angle, and a step (S3630) of transmitting the audio data to the audio apparatus.

There is provided a controlling method in which the channel configuration information represents channels corresponding to each of the plurality of speakers included in the audio apparatus.

The controlling method may include a step of re-identifying the arrangement angle when the tilt angle information changes, a step of changing the audio data based on the audio content, the channel configuration information, the arrangement position, and the re-identified arrangement angle, and a step of transmitting the changed audio data to the audio apparatus.

The step (S3615) of identifying the arrangement position may transmit a control command requesting the position response signal to the audio apparatus at a first time point, receive the position response signal from the audio apparatus at a second time point, and identify the arrangement position of the audio apparatus based on the first time point, the second time point, and the transmission speed of the position response signal.

In the step (S3620) of identifying the arrangement angle, a rotation angle (roll, pitch, and yaw) corresponding to three axes (x, y, and z) that the audio apparatus represents in three dimensions may be acquired based on the tilt angle information, and the arrangement angle of the audio apparatus may be identified based on the rotation angle (roll, pitch, and yaw).

The audio apparatus includes a first audio apparatus and a second audio apparatus, and in the step (S3610) of acquiring the channel configuration information, the position response signal, and the tilt angle information, the first channel configuration information, the first position response signal, and the first tilt angle information of the first audio apparatus may be acquired, and the second channel configuration information, the second position response signal, and the second tilt angle information of the second audio apparatus may be acquired.

In the step (S3615) of identifying the arrangement position, the first arrangement position of the first audio apparatus may be identified based on the first position response signal and the second arrangement position of the second audio apparatus may be identified based on the second position response signal, and in the step (S3620) of identifying the arrangement angle, the first arrangement angle of the first audio apparatus may be identified based on the first tilt angle information and the second arrangement angle of the second audio apparatus may be identified based on the second tilt angle information.

The step (S3625)of acquiring the audio data, the first audio data to be output to the first audio apparatus and the second audio data to be output to the second audio apparatus may be acquired based on audio content, the first channel configuration information, the first arrangement position, the first arrangement angle, second the channel configuration information, the second arrangement position, and the second arrangement angle, and in the step (S3630) of transmitting the audio data, the first audio data may be transmitted to the first audio apparatus and the second audio data may be transmitted to the second audio apparatus.

The steps (S3615 and 3620) of identifying the arrangement position and the arrangement angle, the tilt angle information of the electronic apparatus may be acquired through the sensor unit of the electronic apparatus, and the arrangement position and the arrangement angle of the audio apparatus may be identified based on the position response signal, the tilt angle information of the electronic apparatus, and the tilt angle information of the audio apparatus.

In the steps (S3615 and S3620) of identifying the arrangement position and the arrangement angle, a first angle representing a yaw angle of the electronic apparatus may be acquired based on the tilt angle information of the electronic apparatus, a second angle representing a yaw angle of the audio apparatus may be acquired based on the tilt angle information of the audio apparatus, a candidate area of the audio apparatus may be identified based on a difference value between the first angle and the second angle, and the arrangement position of the audio apparatus may be identified based on the direction in which the position response signal is output among the candidate areas.

The methods according to the diverse embodiments of the disclosure described above may be implemented in the form of an application that may be installed in an existing electronic apparatus.

The methods according to the diverse embodiments of the disclosure described above may be implemented only by software upgrade or hardware upgrade for the existing electronic apparatus.

Various embodiments of the disclosure described above may also be performed through an embedded server included in the electronic apparatus or an external server of at least one of the electronic apparatus or the display apparatus.

According to an embodiment of the disclosure, the diverse embodiments described above may be implemented as software including instructions stored in a machine-readable storage medium (e.g., a computer-readable storage medium). A machine may be an apparatus that invokes the stored instruction from the storage medium and may operate according to the invoked instruction, and may include the electronic apparatus according to the disclosed embodiments. When the instruction is executed by a processor, the processor may perform the function corresponding to the instruction directly or by using other components under the control of the processor. The command may include codes created or executed by a compiler or an interpreter. The storage medium readable by the machine may be provided in the form of a non-transitory storage medium. Here, the term 'non-transitory' means that the storage medium is tangible without including a signal, and does not distinguish whether data are semi-permanently or temporarily stored in the storage medium.

In addition, according to an embodiment of the disclosure, the methods according to the diverse embodiments described above may be included and provided in a computer program product. The computer program product may be traded as a product between a seller and a purchaser. The computer program product may be distributed in a form of a storage medium (for example, a compact disc read only memory (CD-ROM)) that may be read by the machine or online through an application store. In a case of the online distribution, at least portions of the computer program product may be at least temporarily stored in a storage medium such as a memory of a manufacturer server, an application store server, or a relay server or be temporarily created.

Each of components (for example, modules or programs) according to the diverse embodiments may include a single entity or a plurality of entities, and some of the corresponding sub-components described above may be omitted or other sub-components may be further included in the diverse embodiments. Alternatively or additionally, some of the components (e.g., the modules or the programs) may be integrated into one entity, and may perform functions performed by the respective corresponding components before being integrated in the same or similar manner. Operations performed by the modules, the programs, or other components according to the diverse embodiments may be executed in a sequential manner, a parallel manner, an iterative manner, or a heuristic manner, at least some of the operations may be performed in a different order or be omitted, or other operations may be added.

Although embodiments of the disclosure have been illustrated and described hereinabove, the disclosure is not limited to the abovementioned specific embodiments, but may be variously modified by those skilled in the art to which the disclosure pertains without departing from the gist of the disclosure as disclosed in the accompanying claims. These modifications should also be understood to fall within the scope and spirit of the disclosure.

## Claims

1. An electronic apparatus, comprising:
a memory configured to store audio content;
a communication interface; and
at least one processor configured to:
identify an audio apparatus connectable to the electronic apparatus through the communication interface,
acquire, from the audio apparatus through the communication interface, channel configuration information related to a plurality of speakers included in the audio apparatus, a position response signal representing a position of the audio apparatus, and tilt angle information representing a degree to which the audio apparatus is tilted in space,
identify an arrangement position of the audio apparatus based on the position response signal,
identify an arrangement angle of the audio apparatus based on the tilt angle information,
acquire audio data for outputting different audio signals to each of the plurality of speakers of the audio apparatus based on the audio content, the channel configuration information, the arrangement position, and the arrangement angle, and
transmit the audio data to the audio apparatus through the communication interface.

2. The electronic apparatus as claimed in claim 1, wherein the channel configuration information represents a channel corresponding to each of the plurality of speakers included in the audio apparatus.

3. The electronic apparatus as claimed in claim 1, the at least one processor is configured to :
based on the tilt angle information being changed, re-identify the arrangement angle,
change the audio data based on the audio content, the channel configuration information, the arrangement position, and the re-identified arrangement angle, and
transmit the changed audio data to the audio apparatus through the communication interface.

4. The electronic apparatus as claimed in claim 1, wherein the at least one processor is configured to:
transmit a control command requesting the position response signal to the audio apparatus through the communication interface at a first time point,
receive the position response signal from the audio apparatus through the communication interface at a second time point, and
identify the arrangement position of the audio apparatus based on the first time point, the second time point, and a transmission speed of the position response signal.

5. The electronic apparatus as claimed in claim 1, wherein the at least one processor is configured to:
allow the audio apparatus to acquire a rotation angle (roll, pitch, and yaw) corresponding to three axes (x, y, and z) representing three dimensions based on the tilt angle information, and
identify the arrangement angle of the audio apparatus based on the rotation angle (roll, pitch, and yaw).

6. The electronic apparatus as claimed in claim 1, wherein
the audio apparatus includes a first audio apparatus and a second audio apparatus, and
the at least one processor is configured to:
acquire first channel configuration information, a first position response signal, and first tilt angle information of the first audio apparatus through the communication interface, and
acquire second channel configuration information, a second position response signal, and second tilt angle information of the second audio apparatus through the communication interface.

7. The electronic apparatus as claimed in claim 6, wherein the at least one processor is configured to:
identify a first arrangement position of the first audio apparatus based on the first position response signal,
identify a second arrangement position of the second audio apparatus based on the second position response signal,
identify a first arrangement angle of the first audio apparatus based on the first tilt angle information, and
identify a second arrangement angle of the second audio apparatus based on the second tilt angle information.

8. The electronic apparatus as claimed in claim 7, wherein the at least one processor is configured to:
acquire first audio data to be output to the first audio apparatus and second audio data to be output to the second audio apparatus based on the audio content, the first channel configuration information, the first arrangement position, the first arrangement angle, the second channel configuration information, the second arrangement position, and the second arrangement angle, and
transmit the first audio data to the first audio apparatus and the second audio data to the second audio apparatus through the communication interface.

9. The electronic apparatus as claimed in claim 1, comprising:
a sensor unit,
wherein the at least one processor is configured to:
acquire the tilt angle information of the electronic apparatus through the sensor unit, and
identify the arrangement position and the arrangement angle of the audio apparatus based on the position response signal, the tilt angle information of the electronic apparatus, and the tilt angle information of the audio apparatus.

10. The electronic apparatus as claimed in claim 9, wherein the at least one processor is configured to:
acquire a first angle representing a yaw angle of the electronic apparatus based on the tilt angle information of the electronic apparatus,
acquire a second angle representing a yaw angle of the audio apparatus based on the tilt angle information of the audio apparatus,
identify candidate areas of the audio apparatus based on a difference value between the first angle and the second angle, and
identify the arrangement position of the audio apparatus based on a direction in which the position response signal is output among the candidate areas.

11. A controlling method of an electronic apparatus configured to store audio content, the controlling method comprising:
identifying an audio apparatus connectable to the electronic apparatus;
acquiring, from the audio apparatus, channel configuration information related to a plurality of speakers included in the audio apparatus, a position response signal representing a position of the audio apparatus, and tilt angle information representing a degree to which the audio apparatus is tilted in space;
identifying an arrangement position of the audio apparatus based on the position response signal;
identifying an arrangement angle of the audio apparatus based on the tilt angle information;
acquiring audio data for outputting different audio signals to each of the plurality of speakers of the audio apparatus based on the audio content, the channel configuration information, the arrangement position, and the arrangement angle; and
transmitting the audio data to the audio apparatus.

12. The controlling method as claimed in claim 11, wherein the channel configuration information represents a channel corresponding to each of the plurality of speakers included in the audio apparatus.

13. The controlling method as claimed in claim 11, further comprising:
when the tilt angle information changes, re-identifying the arrangement angle;
changing the audio data based on the audio content, the channel configuration information, the arrangement position, and the re-identified arrangement angle; and
transmitting the changed audio data to the audio apparatus.

14. The controlling method as claimed in claim 11, wherein the identifying of the arrangement position includes:
transmitting a control command requesting the position response signal to the audio apparatus at a first time point;
receiving the position response signal from the audio apparatus at a second time point; and
identifying the arrangement position of the audio apparatus based on the first time point, the second time point, and a transmission speed of the position response signal.

15. The controlling method as claimed in claim 11, wherein
in the identifying of the arrangement angle, the audio apparatus acquires a rotation angle (roll, pitch, and yaw) corresponding to three axes (x, y, and z) representing three dimensions based on the tilt angle information, and
the arrangement angle of the audio apparatus is identified based on the rotation angle (roll, pitch, and yaw).
